# EUROPÄISCHE PATENTSCHRIFT

(11) **EP 4 331 963 B1**
(45) Veröffentlichungstag und Bekanntmachung des Hinweises auf die Patenterteilung: **30.09.2026**
(21) Anmeldenummer: 23192429.1
(22) Anmeldetag: 21.08.2023
(51) Int. Cl.: B62L 3/02, B62K 23/06, B60T 11/22, B60T 7/10

(54) **HYDRAULISCHE BREMSANORDNUNG FÜR EIN WENIGSTENS TEILWEISE MUSKELBETRIEBENES FAHRRAD**
HYDRAULIC BRAKE ASSEMBLY FOR A BICYCLE OPERATED AT LEAST PARTIALLY BY MUSCLE
ENSEMBLE FREIN HYDRAULIQUE POUR BICYCLETTE ENTRAÎNÉE AU MOINS PARTIELLEMENT PAR LA FORCE MUSCULAIRE

(30) Priorität: 22.08.2022 DE 102022121163
(43) Veröffentlichungstag der Anmeldung: 06.03.2024
(73) Patentinhaber: Trickstuff GmbH, 79292 Pfaffenweiler (DE)
(72) Erfinder: Schedel, Christoph, 79098 Freiburg (DE); Liedler, Klaus, 79294 Sölden (DE)
(74) Vertreter: BSB Patentanwälte Schütte & Engelen Partnerschaft mbB

(56) Entgegenhaltungen:
- DE-A1- 102015 003 658
- DE-A1- 102015 010 839
- US-A1- 2003 121 262
- US-A1- 2019 061 869
- US-A1- 2020 198 725
- US-A1- 2021 364 016

## Beschreibung

Die vorliegende Erfindung betrifft eine hydraulische Bremsanordnung für ein wenigstens teilweise muskelbetriebenes Fahrrad und umfasst wenigstens eine Gebereinheit, welche mit einer Nehmereinheit fluidisch verbindbar ist. Die Gebereinheit weist einen Bremshebel und ein Zylindergehäuse mit einem Zylinderraum und eine in dem Zylinderraum verschiebbar aufgenommene Kolbeneinheit und wenigstens eine Ausgleichsbehältereinrichtung für ein Hydraulikfluid auf.

Hydraulische Scheibenbremsen für Fahrräder bieten auch bei schnellen Fahrten und beispielsweise im Radsportbereich bei Rennrädern oder Mountainbikes ein sicheres Bremsen. Zudem können damit auch Elektrofahrräder oder Stadträder sicher gebremst werden.

Aufgrund der hydraulischen Betätigung werden jedoch erhöhte Anforderungen an die Wartung solcher Bremsen gestellt. Das betrifft z. B. ein Nachfüllen des Hydraulikfluids und ein Entlüften des geschlossenen Hydraulikkreises. Zudem muss für einen zuverlässigen Betrieb gewährleistet werden, dass sowohl im Betrieb als auch bei Wartungsarbeiten kein Schmutz in den Hydraulikkreis gelangt.

Bei hydraulischen Fahrradbremsen befindet sich das Hydraulikfluid regelmäßig unten im Behälterraum. Darüber befindet sich Luft. Dadurch kann es bei sinkendem Ölstand zu einem Unterdruck bzw. bei zunehmendem Ölstand zu einem Überdruck im Behälter kommen. Um das zu verhindern, ist in der Regel eine Belüftungsbohrung vorgesehen, welche mit der Atmosphäre fluidisch verbunden ist.

Um ein Austreten des Hydraulikfluids über die Belüftungsbohrung zu verhindern (z. B. bei einem Sturz), ist im Behälterraum eine Membran angeordnet, welche den Behälterraum in einen Fluidraum und einen Luftraum trennt. Über eine Verformung der Membran kann das Volumen des Fluidraums an den jeweiligen Ölstand angepasst werden. Die Belüftungsbohrung verhindert, dass dabei ein Unterdruck bzw. Überdruck im Luftraum auftritt.

Üblicherweise sind die Einfüllöffnung für das Hydraulikfluid und der Luftraum beide oberhalb der Membran angeordnet, während sich der Fluidraum unterhalb der Membran befindet. Dadurch mündet die Einfüllöffnung in den Luftraum, wenn die Membran montiert ist. Das Hydraulikfluid ist durch die Membran von der Einfüllöffnung "abgeschirmt". Um das Hydraulikfluid über die Einfüllöffnung in den Fluidraum zu füllen, muss daher erst die Membran regelmäßig demontiert werden. Nach dem Einfüllen des Hydraulikfluids muss die Membran wieder montiert werden.

Das Dokument US 2020/198725 A1 offenbart die Merkmale der Präambel des Anspruchs 1.

Die DE 10 2017 208 483 A1 beschreibt eine Rennrad-Schalt-Brems-Armatur für eine hydraulische Rennradbremse, bei welcher der Luftraum unterhalb der Membran angeordnet ist. Die Einfüllöffnung und der Fluidraum sind beide oberhalb der Membran angeordnet. Somit kann das Hydraulikfluid über die Einfüllöffnung in den Fluidraum gefüllt werden, ohne die Membran zu demontieren. Demgegenüber ist es die Aufgabe der vorliegenden Erfindung, eine verbesserte hydraulische Bremsanordnung zur Verfügung zu stellen. Insbesondere soll die Bremsanordnung eine besonders einfache und auch für ungeübte Nutzer leicht durchführbare Wartung ermöglichen, ohne die Membran demontieren zu müssen. Zugleich soll die Bremsanordnung auch unter schwierigen Bedingungen einen zuverlässigen Betrieb und eine sichere Bremswirkung bieten, beispielsweise in dreckiger oder auch abrasiver (Sand, Salz) Umgebung bzw. bei einer Verwendung an Mountainbikes.

Diese Aufgabe wird gelöst durch eine Bremsanordnung mit den Merkmalen des Anspruchs 1. Bevorzugte Weiterbildungen sind Gegenstand der Unteransprüche. Weitere Vorteile und Merkmale der vorliegenden Erfindung ergeben sich aus der allgemeinen Beschreibung und aus der Beschreibung des Ausführungsbeispiels. Die erfindungsgemäße hydraulische Bremsanordnung ist für ein wenigstens teilweise muskelbetriebenes Fahrrad vorgesehen. Die Bremsanordnung umfasst wenigstens eine Gebereinheit, welche mit einer Nehmereinheit fluidisch verbindbar ist. Die Bremsanordnung kann wenigstens eine Nehmereinheit umfassen. Die Gebereinheit umfasst einen Bremshebel und ein Zylindergehäuse mit einem Zylinderraum. Die Gebereinheit umfasst eine in dem Zylinderraum verschiebbar aufgenommene Kolbeneinheit. Die Gebereinheit umfasst wenigstens eine Ausgleichsbehältereinrichtung für ein Hydraulikfluid. Die Ausgleichsbehältereinrichtung umfasst einen Behälterraum und wenigstens eine Einfüllöffnung zum Einfüllen des Hydraulikfluids in den Behälterraum. In dem Behälterraum ist wenigstens eine (flexible und/oder elastische) Membraneinheit angeordnet. Die Membraneinheit unterteilt den Behälterraum in einen Fluidraum für das Hydraulikfluid und einen gegenüber dem Fluidraum (fluiddicht) abgedichteten Luftraum. Zwischen dem Fluidraum und dem Zylinderraum ist wenigstens eine Kanalverbindung ausgebildet. Insbesondere sind der Zylinderraum und der Fluidraum über die Kanalverbindung fluidisch verbunden. Der Luftraum ist über wenigstens eine Belüftungsöffnung mit der Atmosphäre verbunden, sodass ein Druckausgleich zwischen Luftraum und Atmosphäre möglich ist. Die Einfüllöffnung ist (bei bestimmungsgemäß montierter Membraneinheit) fluidisch mit dem Fluidraum verbunden. Insbesondere mündet die Einfüllöffnung in den Fluidraum. Insbesondere sind die Einfüllöffnung und die Belüftungsöffnung auf gegenüberliegenden Seiten der Membraneinheit angeordnet. Insbesondere sind die Einfüllöffnung und die Belüftungsöffnung durch die Membraneinheit voneinander (fluiddicht) getrennt. Dabei mündet die Belüftungsöffnung in einen Aufnahmeraum. Der Aufnahmeraum ist von einem Basiskörper der Gebereinheit wenigstens teilweise umschlossen. In dem Aufnahmeraum ist eine Betätigungsmechanik wenigstens teilweise angeordnet. Die Betätigungsmechanik dient zur Kraftübertragung vom Bremshebel auf die Kolbeneinheit. Die Belüftungsöffnung kann auch seitlich aus dem Basiskörper und insbesondere aus der Ausgleichsbehältereinrichtung austreten. Insbesondere mündet die Belüftungsöffnung dann oberhalb des Aufnahmeraums in die Umgebung der Gebereinheit.

Die erfindungsgemäße Bremsanordnung bietet viele Vorteile. Einen erheblichen Vorteil bietet die in den Aufnahmeraum mündende Belüftungsöffnung. Dadurch wird einer Verschmutzung der Membraneinheit und des Luftraumes zuverlässig entgegengewirkt. Solcher Schmutz könnte sonst über die Belüftungsöffnung z. B. bis zur Membraneinheit gelangen und dann bei Wartungsarbeiten (z. B. wenn die Membraneinheit bewegt oder abgenommen wird) weiter in den Hydraulikkreis eintreten. Zudem hat sich eine solche Anordnung der Belüftungsöffnung als besonders vorteilhaft erwiesen, wenn ein Fahrrad beispielsweise mit einem Hochdruckreiniger gereinigt wird. Dabei könnte es sonst zu einem erheblichen Eintrag von Wasser und Schmutz kommen, wodurch die Membraneinheit direkt oder langfristig beschädigt werden könnte. Durch ihre Anordnung im Aufnahmeraum kann der Hochdruckstrahl nicht direkt auf die Belüftungsöffnung gerichtet werden. Zugleich ermöglicht die Erfindung ein besonders einfaches Befüllen des Hydraulikkreises, ohne dass die Membraneinheit demontiert werden muss. Auch dadurch wird der Eintrag von Schmutz verhindert. Zudem sind die Membraneinheit und der Hydraulikkreis insgesamt auch bei schwierigen Bedingungen (Wartung im Feld, Benutzung in dreckiger bzw. sandiger Umgebung) sicher untergebracht.

Vorzugsweise ist die Belüftungsöffnung kanalartig ausgebildet. Vorzugsweise ist die Belüftungsöffnung als Belüftungsbohrung ausgeführt oder umfasst wenigstens eine (und insbesondere genau eine) Belüftungsbohrung. Die Belüftungsöffnung ist vorzugsweise wenigstens abschnittsweise rotationssymmetrisch ausgebildet und kann teilweise oder vollständig zylindrisch ausgebildet sein. Insbesondere kann die Belüftungsöffnung eine Form aufweisen, wie sich durch den Einsatz eines Bohrers oder Fräsers ergibt. Möglich sind aber auch andere Geometrien. In allen Ausgestaltungen, Weiterbildungen und Ausführungsformen kann der Begriff "Belüftungsöffnung" insbesondere durch den Begriff "Belüftungsbohrung" präzisiert werden.

Der Basiskörper ist erfindungsgemäß einstückig ausgebildet. Erfindungsgemäß ist das Zylindergehäuse integraler Bestandteil des Basiskörpers. Insbesondere ist das Zylindergehäuse einstückig mit dem Basiskörper verbunden. Vorzugsweise ist der Zylinderraum in den Basiskörper eingearbeitet. Insbesondere wird der Zylinderraum durch eine Ausnehmung im Basiskörper bereitgestellt. Insbesondere ist der Basiskörper aus einem Stück Material herausgearbeitet. Der Basiskörper kann auch in einem Stück gegossen sein.

Erfindungsgemäß verläuft die Belüftungsöffnung wenigstens teilweise und vorzugsweise vollständig im Basiskörper. In einer solchen Ausgestaltung bietet die Mündung der Belüftungsöffnung in den Aufnahmeraum besonders viele Vorteile. Zudem sind so die Komponenten des Hydraulikkreises besonders sicher untergebracht und vor Schmutz- und Stoßeinwirkung geschützt. Ein solcher Basiskörper ermöglicht zudem einen konstruktiv unaufwendigen Aufbau der Bremsanordnung mit besonders wenigen Einzelteilen. Dadurch ergeben sich ein besonders verlässlicher und robuster Betrieb und auch eine einfache Wartung.

Insbesondere ist der Aufnahmeraum im Basiskörper ausgebildet. Insbesondere ist der Aufnahmeraum integraler Bestandteil des Basiskörpers. Vorzugsweise ist der Aufnahmeraum in den Basiskörper eingearbeitet. Insbesondere wird der Aufnahmeraum durch eine Ausnehmung im Basiskörper bereitgestellt. Insbesondere umschließt der Basiskörper den Aufnahmeraum an wenigstens zwei Seiten und vorzugsweise an wenigstens drei Seiten wenigstens teilweise. Insbesondere ist der Aufnahmeraum an wenigstens zwei und vorzugsweise an wenigstens drei Seiten wenigstens abschnittsweise vom Basiskörper umgeben.

In einer vorteilhaften Weiterbildung schneidet eine gedachte Verlängerung einer Längsachse der Belüftungsöffnung die Betätigungsmechanik. Die Betätigungsmechanik umfasst insbesondere wenigstens einen Pleuel mit einer Pleuelstange und einem Pleuelkopf. Insbesondere ist der Pleuelkopf fest mit der Pleuelstange verbunden. Insbesondere ist der Pleuel einstückig ausgebildet. Insbesondere ist die Kolbeneinheit über die Betätigungsmechanik mit dem Bremshebel wirkverbunden, sodass die Kolbeneinheit infolge einer Betätigung der Gebereinheit im Zylinderraum verschoben wird.

Vorzugsweise schneidet die gedachte Verlängerung den Pleuel und insbesondere dessen Pleuelstange. Der Pleuel erstreckt sich insbesondere vom Aufnahmeraum aus durch eine Verbindungsöffnung des Zylindergehäuses hindurch in den Zylinderraum. Die Verbindungsöffnung ist insbesondere in einer Stützwand ausgebildet. Insbesondere mündet die Belüftungsöffnung oberhalb des Pleuels in den Aufnahmeraum.

Vorzugsweise ist in dem Aufnahmeraum wenigstens ein Nockenkörper der Betätigungsmechanik wenigstens teilweise untergebracht. Insbesondere ist ein Pleuel und vorzugsweise dessen Pleuelstange schwenkbar am Nockenkörper angebunden. Es ist bevorzugt, dass die Belüftungsöffnung zwischen dem Nockenkörper und einer Stützwand in den Aufnahmeraum mündet. Dabei ist in der Stützwand insbesondere eine Verbindungsöffnung ausgebildet, durch welche sich die Betätigungsmechanik (insbesondere der Pleuel) vom Aufnahmeraum aus in den Zylinderraum zur Kolbeneinheit erstreckt. Das bietet eine besonders vorteilhafte Unterbringung der Belüftungsöffnung im Aufnahmeraum. Insbesondere verläuft eine gedachte Verlängerung der Längsachse der Belüftungsöffnung zwischen der Stützwand und dem Nockenkörper.

Vorzugsweise ist der Pleuel um eine Pleuelschwenkachse schwenkbar am Nockenkörper angebunden. Dabei ist bevorzugt und vorteilhaft, dass die Pleuelschwenkachse und eine Längsachse der Belüftungsöffnung in einer gemeinsamen Ebene verlaufen und vorzugsweiseparallel verlaufen. Wenn der Bremshebel in einer Ruhestellung ist und/oder wenn der Pleuel mit seinem Pleuelkopf an der Stützwand (innerhalb des Zylinderraums) anliegt, verlaufen die Pleuelschwenkachse und die Längsachse der Belüftungsöffnung und die Längsachse des Zylinderraums vorzugsweise in einer gemeinsamen Ebene. Unter einer Ruhestellung wird im Rahmen der vorliegenden Erfindung insbesondere verstanden, dass die Gebereinheit bzw. der Bremshebel ohne Betätigung sind. Das bietet eine besonders kompakte und zugleich geschützte Unterbringung von Belüftungsöffnung und Betätigungsmechanik im Aufnahmeraum. Bei einer Betätigung des Bremshebels schwenkt die Pleuelschwenkachse insbesondere aus einer Ebene heraus, in welcher die Längsachse der Belüftungsöffnung und die Längsachse des Zylinderraums verlaufen.

Insbesondere ist der Bremshebel um eine Bremshebelschwenkachse schwenkbar an einer Hebelaufnahme angebunden. Dabei weist die Belüftungsöffnung vorzugsweise eine Längsachse auf, welche in einer gemeinsamen Ebene mit der Bremshebelschwenkachse und insbesondere parallel zur Bremshebelschwenkachse verläuft. Die Hebelaufnahme ist vorzugsweise integraler Bestandteil des Basiskörpers und insbesondere einstückig mit dem Basiskörper verbunden. Insbesondere ist der Bremshebel am Basiskörper schwenkbar gelagert. Die Bremshebelschwenkachse verläuft vorzugsweise durch den Aufnahmeraum. So tragen der Bremshebel bzw. die Betätigungsmechanik zum Schutz der Belüftungsöffnung bei. Möglich ist auch, dass die Bremshebelschwenkachse den Aufnahmeraum seitlich begrenzt. Insbesondere verläuft eine Nockenschwenkachse durch den Aufnahmeraum. Insbesondere verläuft die Pleuelschwenkachse durch den Aufnahmeraum.

In einer vorteilhaften Ausgestaltung weisen die Belüftungsöffnung und die Kanalverbindung Längsachsen auf, welche in einer gemeinsamen Ebene und vorzugsweise parallel verlaufen. Eine solche Ausgestaltung bezieht sich insbesondere auf eine Längsachse wenigstens einer Ausgleichsbohrung und/oder wenigstens einer Schmierbohrung und/oder eines Zentralkanals der Kanalverbindung. Dadurch kann die Belüftungsöffnung besonders unaufwendig und beispielsweise zusammen mit der Kanalverbindung hergestellt werden. Die zuvor beschriebenen Ausführungen bieten dabei eine besonders vorteilhafte konstruktive Grundlage, um die Belüftungsöffnung derart anzuordnen.

In einer besonders vorteilhaften und bevorzugten Weiterbildung erstreckt sich eine gedachte axiale Verlängerung des Zylinderraums durch den Aufnahmeraum. Insbesondere erstreckt sich eine gedachte Verlängerung der Längsachse des Zylinderraums durch den Aufnahmeraum. Insbesondere schneidet eine gedachte Verlängerung der Längsachse des Zylinderraums eine gedachte Verlängerung der Längsachse der Belüftungsöffnung.

Es ist bevorzugt und vorteilhaft, dass die Ausgleichsbehältereinrichtung (insbesondere wenigstens die Behälterwanne und/oder der Deckel und/oder die Membraneinheit) oberhalb des Zylinderraums und des Aufnahmeraums angeordnet ist. Vorzugsweise weisen die Ausgleichsbehältereinrichtung und der Zylinderraum und/oder der Aufnahmeraum Längsachsen auf, welche in einer gemeinsamen Ebene und vorzugsweise parallel verlaufen. Ein solcher konstruktiver Aufbau bietet viele Vorteile. Insbesondere ist die Ausgleichsbehältereinrichtung länglich ausgebildet. Vorzugsweise überspannt die Ausgleichsbehältereinrichtung das Zylindergehäuse und den Aufnahmeraum wenigstens abschnittsweise. Insbesondere bildet der Boden der Behälterwanne eine Decke (also die obere Wandung) des Zylindergehäuses und des Aufnahmeraums.

Die Einfüllöffnung ist vorzugsweise auch als eine Entlüftungsöffnung zum Entlüften eines Hydraulikkreises ausgebildet. Vorzugsweise ist eine Entlüftung bei bestimmungsgemäß montierter Membraneinheit möglich. Insbesondere kann ohne Entfernen der Membraneinheit entlüftet werden. Insbesondere stellen die Gebereinheit und die Nehmereinheit und die Leitungseinrichtung einen geschlossenen Hydraulikkreis bereit. Insbesondere ist die Einfüllöffnung dazu geeignet und ausgebildet, im Rahmen einer Entlüftung Luft aus dem Hydraulikkreis in die Umgebung abzuführen. So können auch ungeübte Benutzer die Bremsanordnung einfach Befüllen und Entlüften. Zudem kann auf zusätzliche Bohrungen bzw. Öffnungen in der Gebereinheit verzichtet werden.

Vorzugsweise ist der Luftraum unterhalb der Membraneinheit angeordnet. Vorzugsweise ist der Fluidraum oberhalb der Membraneinheit angeordnet. Diese Anordnungen liegen insbesondere vor, wenn die Gebereinheit bestimmungsgemäß an einem Lenker montiert ist. Insbesondere ist der Luftraum zwischen der Membraneinheit und dem Aufnahmeraum. Der Aufnahmeraum ist insbesondere unterhalb der Ausgleichsbehältereinrichtung. Insbesondere ist der Zylinderraum wenigstens teilweise unterhalb der Ausgleichsbehältereinrichtung. Insbesondere erstrecken sich die Membraneinheit und der Behälterraum nur über einen Teil des radialen Umfangs des Zylindergehäuses.

Die Ausgleichsbehältereinrichtung (insbesondere der Behälterraum) weist insbesondere eine Längsachse auf, welche zur Horizontalen geneigt ist (schräg dazu steht), wenn die Gebereinheit bestimmungsgemäß an einem Lenker montiert ist. Vorzugsweise weist die Ausgleichsbehältereinrichtung wenigstens einen Sammelbereich für die Luft auf, welcher höher als die übrigen Bereiche der Ausgleichsbehältereinrichtung angeordnet ist, wenn die Gebereinheit bestimmungsgemäß an einem Lenker montiert ist. Dabei ist die Einfüllöffnung vorzugsweise an dem Sammelbereich und insbesondere oberhalb des Sammelbereichs der Ausgleichsbehältereinrichtung angeordnet. Vorzugsweise ist ein Endabschnitt der Ausgleichsbehältereinrichtung höher als ein in Längsrichtung gegenüberliegender Endabschnitt der Ausgleichsbehältereinrichtung, wenn die Gebereinheit bestimmungsgemäß an einem Lenker montiert ist. Dabei ist die Einfüllöffnung vorzugsweise an dem höher liegenden Endabschnitt der Ausgleichsbehältereinrichtung angeordnet. Dadurch kann die Bremsanordnung noch einfacher und zuverlässiger entlüftet werden. Die Bremsanordnung kann wenigstens einen Lenker umfassen, an welchem die Gebereinheit montierbar ist. Die Bremsanordnung kann ein Fahrrad mit einem solchen Lenker umfassen.

Insbesondere ist der höher liegende Endabschnitt der Ausgleichsbehältereinrichtung näher zum Bremshebel als der tiefer liegende Endabschnitt angeordnet, wenn die Gebereinheit bestimmungsgemäß an einem Lenker montiert ist. Der tiefer liegende Endabschnitt der Ausgleichsbehältereinrichtung ist dann insbesondere näher zu einer Anschlussöffnung bzw. zu einem nehmerseitigen Ende der Gebereinheit angeordnet als der höher liegende Endabschnitt der Ausgleichsbehältereinrichtung. Insbesondere bildet der Bremshebel eine höchste Stelle der Gebereinheit, wenn die Gebereinheit bestimmungsgemäß an einem Lenker montiert ist. Insbesondere steht auch die Bremshebelschwenkachse schräg zur Horizontalen bzw. zur Längsachse des Lenkers, wenn die Gebereinheit bestimmungsgemäß an einem Lenker montiert ist.

Die Gebereinheit kann eine Lenkeranbindung aufweisen, welche so ausgebildet ist, dass die Gebereinheit (nur) so an einem Lenker montierbar ist, dass die Längsachse der Ausgleichsbehältereinrichtung zur Längsachse des Lenkers (wie zuvor beschrieben) geneigt ist. Möglich ist auch, dass der Lenker einen gekröpften Abschnitt (sog. Upsweep) aufweist, an welchem die Gebereinheit mittels der Lenkeranbindung befestigbar ist. Durch die Kröpfung wird die Gebereinheit dann zur Horizontalen geneigt.

Vorzugsweise sind die Kanalverbindung und die Einfüllöffnung an in Längsrichtung gegenüberliegenden Endabschnitten der Ausgleichsbehältereinrichtung angeordnet. Insbesondere ist die Kanalverbindung an dem tiefer liegenden Endabschnitt der Ausgleichsbehältereinrichtung angeordnet. Dadurch kann das Entlüften weiter verbessert werden.

Vorzugsweise weisen die Belüftungsöffnung und die Einfüllöffnung Längsachsen auf, welche in einer gemeinsamen Ebene und vorzugsweise parallel verlaufen. Insbesondere weisen die Belüftungsöffnung und die Einfüllöffnung keine gemeinsame Längsachse auf. Möglich ist aber auch, dass die Belüftungsöffnung und die Einfüllöffnung eine gemeinsame Längsachse aufweisen.

Die Ausgleichsbehältereinrichtung umfasst vorzugsweise wenigstens eine Behälterwanne und wenigstens einen Deckel. Insbesondere sind die Behälterwanne und der Deckel mittels wenigstens einer Behälterdichtung abgedichtet aneinander montiert. Dabei ist die Behälterdichtung ein integraler Bestandteil der Membraneinheit. So werden die Anzahl an Bauteilen reduziert und die Montage vereinfacht. Insbesondere umfasst die Membraneinheit wenigstens eine Behälterdichtung. Insbesondere ist die Behälterdichtung einstückig mit der Membraneinheit verbunden. Insbesondere ist die Membraneinheit einstückig ausgebildet. Insbesondere ist die Behälterdichtung wenigstens teilweise umlaufend um ein Membranelement angeordnet.

Insbesondere wird der Behälterraum von der Behälterwanne und dem Deckel begrenzt. Die Behälterwanne ist insbesondere integraler Bestandteil des Basiskörpers. Insbesondere ist die Behälterwanne einstückig mit dem Basiskörper verbunden. Der Deckel ist insbesondere ein separates Teil. Insbesondere wird die Behälterwanne durch eine Ausnehmung im Basiskörper bereitgestellt. Die Behälterwanne kann durch Materialabtrag vom Basiskörper hergestellt sein.

In einer vorteilhaften Ausgestaltung ist die Belüftungsöffnung in einem Boden in der Behälterwanne ausgebildet. Insbesondere ist die Einfüllöffnung im Deckel ausgebildet. Insbesondere bildet der Boden der Behälterwanne zugleich eine Decke (also eine obere Wandung) des Aufnahmeraums und/oder des Zylinderraums. Das bietet eine unaufwendige Herstellung einer besonders kompakten Gebereinheit.

Es ist möglich und bevorzugt, dass die Behälterwanne und/oder der Deckel wenigstens eine Aufnahmenut für die Behälterdichtung bereitstellt. Insbesondere sind die Behälterwanne und der Deckel im Bereich der Aufnahmenut im bestimmungsgemäß montierten Zustand beabstandet, sodass die Behälterdichtung abschersicher aufgenommen ist. Dadurch kann die Behälterdichtung zum Beispiel bei einem Unfall mit einem Stoß auf den Deckel nicht eingeklemmt und abgeschert werden. Insbesondere liegen der Deckel und die Behälterwanne außerhalb der Aufnahmenut wenigstens abschnittsweise berührend aneinander. Insbesondere ist der Deckel an der Behälterwanne befestigt und vorzugsweise verschraubt.

In einer vorteilhaften Weiterbildung umfasst die Membraneinheit ein zwischen dem Fluidraum und dem Luftraum aufspannbares Membranelement. Insbesondere das Membranelement integraler Bestandteil der Membraneinheit. Insbesondere ist das Membranelement einstückig mit der Membraneinheit verbunden. Vorzugsweise umfasst die Membraneinheit wenigstens ein bogenförmiges Verbindungselement. Insbesondere spannt das Verbindungselement das Membranelement wenigstens abschnittsweise gegen den Boden der Ausgleichsbehältereinrichtung vor.

Insbesondere ist das Membranelement über das Verbindungselement mit der Behälterdichtung verbunden. Insbesondere verläuft das Verbindungselement zwischen der Behälterdichtung und dem Membranelement. Insbesondere ist auch das Verbindungselement integraler Bestandteil der Membraneinheit. Das Verbindungselement dient insbesondere dazu, eine Bewegung des Membranelements relativ zur Behälterdichtung zu ermöglichen.

Vorzugsweise ist das Membranelement oberhalb der Belüftungsöffnung gewölbt ausgebildet. Dadurch ist das Membranelement insbesondere wenigstens dort, wo es gewölbt ist, beabstandet von einem Boden der Ausgleichsbehältereinrichtung angeordnet.

Vorzugsweise stellt die Membraneinheit wenigstens einen Wannenraum bereit, welcher von einem Wannenboden und quer zum Wannenboden verlaufenden Seitenwänden umschlossen ist. Im Wannenraum ist insbesondere der Fluidraum angeordnet. Auf einer vom Fluidraum abgewandten Seite des Wannenraums (insbesondere unterhalb des Wannenbodens) sind insbesondere der Luftraum und die Belüftungsöffnung angeordnet. Insbesondere ist der Wannenraum (oben) offen ausgebildet und ist dort vorzugsweise vom Deckel (und insbesondere auch von der Behälterwanne) verschlossen.

Insbesondere ist das Membranelement wannenförmig ausgebildet. Insbesondere umfasst das Membranelement wenigstens eine Membranwanne. Im bestimmungsgemäßen Montagezustand erstreckt sich die Membranwanne insbesondere in die Behälterwanne. Vorzugsweise ragt die Membranwanne über die Behälterwanne hinaus. Insbesondere ragt die Membranwanne über die Behälterdichtung hinaus. Insbesondere ist ein Boden der Membranwanne gewölbt. Insbesondere liegt ein Bodenrand der Membranwanne am Boden der Ausgleichsbehältereinrichtung an. Insbesondere spannt das Verbindungselement den Bodenrand der Membranwanne gegen den Boden der Ausgleichsbehältereinrichtung vor. Insbesondere ist die Membranwanne vorgeformt ausgebildet.

Vorzugsweise verläuft die Kanalverbindung vom Fluidraum aus durch den Deckel der Ausgleichsbehältereinrichtung und durch den Basiskörper zum Zylinderraum. Dabei ist vorzugsweise vorgesehen, dass der Deckel und der Basiskörper umlaufend um die Kanalverbindung mittels einer Kanaldichtung abgedichtet aneinander montiert sind. Insbesondere ist die Kanaldichtung integraler Bestandteil der Membraneinheit. Insbesondere ist die Kanaldichtung einstückig mit der Membraneinheit verbunden. Insbesondere verläuft die Kanalverbindung wenigstens abschnittsweise innerhalb des Deckels und innerhalb des Basiskörpers. Insbesondere verläuft die Kanalverbindung durch den Teil des Basiskörpers, welcher das Zylindergehäuse bereitstellt und insbesondere auch durch einen Teil des Basiskörpers, welcher oberhalb des Zylindergehäuses und seitlich neben der Behälterwanne angeordnet ist.

Insbesondere stellen der Deckel und/oder die Behälterwanne wenigstens eine Aufnahmenut für die Kanaldichtung bereit, sodass die Kanaldichtung abschersicher aufgenommen ist. Diese Aufnahmenut ist insbesondere analog zu der zuvor beschriebenen Aufnahmenut für die Behälterdichtung ausgebildet.

Vorzugsweise umschließt die Kanaldichtung die Kanalverbindung ringförmig. Vorzugsweise erstreckt sich die Kanaldichtung dabei abschnittsweise zwischen dem Deckel und einer Behälterwanne der Ausgleichsbehältereinrichtung. Insbesondere ist die Kanaldichtung dazu geeignet und ausgebildet, ein Eindringen von Luft aus dem Luftraum in die Kanalverbindung (zwischen Deckel und Behälterwanne) zu verhindern. Die Kanaldichtung ist insbesondere ringförmig ausgebildet. Insbesondere umgibt die Kanaldichtung eine (zentrale) Durchgangsöffnung. Insbesondere verlaufen die Kanaldichtung und die Behälterdichtung abschnittsweise direkt angrenzend aneinander. Insbesondere dichtet die Kanaldichtung dort auch den Behälterraum zur Kanalverbindung ab.

Vorzugsweise umschließt die Behälterdichtung das Membranelement ringförmig. Dadurch wird eine zuverlässige Abdichtung des Behälterraums nach außen und zugleich eine zuverlässige Abdichtung des Luftraums zum Fluidraum gewährleistet. Vorzugsweise ist die Kanaldichtung außerhalb des Membranelements angeordnet. Das bietet viele konstruktive Vorteile und ermöglicht beispielsweise eine besonders kompakte Ausführung der Gebereinheit. Zudem ergeben sich dadurch für die Anordnung der Kanalverbindung besonders hohe Freiheitsgrade, was wiederum für eine besonders kompakte und leichte Auslegung der Gebereinheit genutzt werden kann. Insbesondere ist die Behälterdichtung entlang ihres gesamten Umfangs zwischen Deckel und Behälterwanne angeordnet.

Insbesondere ist die Kanaldichtung nicht von der Behälterdichtung ringförmig umschlossen. Insbesondere liegt die Kanaldichtung wenigstens abschnittsweise außerhalb der Behälterdichtung. Insbesondere liegt die Kanaldichtung seitlich neben dem Membranelement und insbesondere wenigstens abschnittsweise seitlich neben der Behälterdichtung. Insbesondere verläuft die Behälterdichtung abschnittsweise zwischen der Kanaldichtung und dem Membranelement.

In einer vorteilhaften Weiterbildung ist vorgesehen, dass das Hydraulikfluid die Membraneinheit passieren muss, um (vom Behälterraum) zum Zylinderraum zu gelangen. Dazu tritt das Hydraulikfluid vorzugsweise durch eine von der Kanaldichtung umgebene Durchgangsöffnung durch die Membraneinheit hindurch. Vorzugsweise muss das Hydraulikfluid durch die Durchgangsöffnung in der Membraneinheit strömen, um von dem Fluidraum über die Kanalverbindung zum Zylinderraum zu gelangen.

Besonders bevorzugt ist die Membraneinheit einstückig ausgebildet. Insbesondere sind das Membranelement und das Verbindungselement und die Behälterdichtung und die Kanaldichtung einstückig miteinander verbunden. Insbesondere ist die Membraneinheit flexibel und vorzugsweise elastisch ausgebildet. Die Anmelderin behält sich vor, eine Membraneinheit insbesondere zur Verwendung an einer Bremsanordnung zu beanspruchen, welche den Behälterraum in einen Fluidraum für das Hydraulikfluid und einen gegenüber dem Fluidraum (fluiddicht) abgedichteten Luftraum unterteilt. Vorzugsweise sind bei der Membraneinheit das Membranelement und das Verbindungselement und die Behälterdichtung und die Kanaldichtung einstückig miteinander verbunden sind. Vorzugsweise ist die beanspruchte Membraneinheit wie hier beschrieben ausgebildet.

Die Kanalverbindung weist insbesondere eine Längsachse auf, welche quer zu einer gemeinsamen Längsachse der Ausgleichsbehältereinrichtung und des Zylinderraums und des Aufnahmeraums verläuft.

Die Kanalverbindung umfasst insbesondere wenigstens eine Ausgleichsbohrung. Die Ausgleichsbohrung kann auch als Schnüffelbohrung bezeichnet werden. Insbesondere wird unter der Ausgleichsbohrung eine kanalartige Durchgangsöffnung verstanden, welche nicht zwangsläufig durch Bohren entstanden sein muss. Die Kanalverbindung umfasst insbesondere wenigstens eine Schmierbohrung. Die Kanalverbindung umfasst insbesondere einen Zentralkanal, welcher sich in die wenigstens eine Ausgleichsbohrung und die wenigstens eine Schmierbohrung aufteilt. Insbesondere weist der Zentralkanal einen größeren Querschnitt als die Ausgleichsbohrung und/oder die Schmierbohrung auf. Der Zentralkanal ist insbesondere als eine Sacklochbohrung im Basiskörper ausgebildet. Die Ausgleichsbohrung und die Schmierbohrung beginnen insbesondere am Boden des Zentralkanals und erstrecken sich von dort in den Zylinderraum. Insbesondere wird die Kanalverbindung durch wenigstens eine Bohrung und vorzugsweise durch mehrere Bohrungen im Basiskörper und/oder im Deckel gebildet.

Vorzugsweise weisen der Zentralkanal und wenigstens eine der wenigstens einen Ausgleichsbohrung und wenigstens eine der wenigstens einen Schmierbohrung Längsachsen auf, welche in einer gemeinsamen Ebene und vorzugsweise parallel verlaufen. Bei zwei oder mehr Ausgleichsbohrungen (bzw. Schmierbohrungen) bezieht sich diese Angabe insbesondere auf eine gedachte Längsachse im Zentrum der Bohrungen oder auf die Längsachse einer zentralen Bohrung. Insbesondere verläuft die Belüftungsöffnung nicht rechtwinkelig zur wenigstens einen Ausgleichsbohrung und/oder zur wenigstens einen Schmierbohrung.

Insbesondere umfasst die Kanalverbindung wenigstens einen Querkanal, welcher den Zentralkanal mit dem Fluidraum verbindet. Insbesondere ist der Querkanal im Deckel ausgebildet.

Insbesondere verläuft ein Teil des Zentralkanals im Deckel und ein anderer Teil des Zentralkanals im Basiskörper. Insbesondere erstreckt sich die Kanaldichtung zwischen den beiden Teilen des Zentralkanals.

Insbesondere begrenzen die Kolbeneinheit und das Zylindergehäuse einen (mit der Nehmereinheit fluidisch verbindbaren) Druckraum. Insbesondere stellt der Druckraum einen Teil des Zylinderraums dar. Dabei ist die wenigstens eine Ausgleichsbohrung im Zylindergehäuse (insbesondere in einer Zylinderwandung des Zylindergehäuses) angeordnet. Die wenigstens eine Ausgleichsbohrung verbindet den Druckraum mit dem Fluidraum (wenn die Kolbeneinheit in einer Ruheposition ist bzw. wenn die Gebereinheit nicht betätigt wird). Bei einer Betätigung der Gebereinheit dichtet die Kolbeneinheit den Druckraum gegenüber dem Fluidraum insbesondere ab, sodass der Druckraum mit Druck beaufschlagbar ist. Mit anderen Worten, die Ausgleichsbohrung kann aufgrund einer Betätigung der Gebereinheit durch die Kolbeneinheit verschlossen werden. Eine anschließende weitere Bewegung der Kolbeneinheit führt insbesondere zu einem Druckaufbau im Druckraum und zu einer Verkleinerung des Volumens des Druckraums. Die Betätigung der Gebereinheit erfolgt insbesondere durch ein (manuelles) Bewegen bzw. Betätigen des Bremshebels.

Die wenigstens eine Schmierbohrung verbindet insbesondere einen außerhalb des Druckraums liegenden Teil des Zylinderraums mit dem Fluidraum. Die Schmierbohrung ist insbesondere zwischen der Ausgleichsbohrung und einem hebelseitigen Ende des Zylindergehäuses angeordnet. Die Schmierbohrung dient insbesondere dazu, Hydraulikfluid aus dem Behälterraum zur Schmierung der Kolbeneinheit zuzuführen. Zudem dient die Schmierbohrung insbesondere dazu, Hydraulikfluid in den Behälterraum abzuführen, welches hinter eine Primärdichtung der Dichtungseinrichtung der Kolbeneinheit gelaufen ist.

Insbesondere weist das Zylindergehäuse an einem nehmerseitigen Ende eine Anschlussöffnung zum Koppeln einer Leitungseinrichtung auf. Insbesondere kommuniziert das Hydraulikfluid im Druckraum über die Anschlussöffnung mit dem Hydraulikfluid in der Leitungseinrichtung bzw. der Nehmereinheit. Die Anschlussöffnung und die Verbindungsöffnung liegen insbesondere auf der Längsachse des Zylinderraums. Die Anschlussöffnung und die Verbindungsöffnung sind insbesondere an gegenüberliegenden Enden des Zylindergehäuses angeordnet.

Im Rahmen der vorliegenden Erfindung beziehen sich Angaben zur relativen Positionierung von Bauteilen insbesondere auf eine bestimmungsgemäße Montageposition der Bremsanordnung und insbesondere auf eine bestimmungsgemäß an einem Lenker montierte Gebereinheit. Der Begriff "fluiddicht" bezieht sich insbesondere auf das verwendete Hydraulikfluid unter den betriebsgemäß vorgesehenen Druckbedingungen.

Die Einfüllöffnung ist insbesondere gegenüber dem Luftraum durch die Membraneinheit abgedichtet. Die Belüftungsöffnung ist insbesondere unterhalb der Membraneinheit angeordnet. Insbesondere ruht das Hydraulikfluid auf der Membraneinheit. Insbesondere ruht das Hydraulikfluid nicht auf dem Boden der Behälterwanne. Insbesondere liegt der Fluidraum höher als der Luftraum. Insbesondere liegt der Fluidraum oberhalb des Luftraums. Insbesondere liegt der Luftraum unterhalb des Fluidraums.

Die Ausgleichsbehältereinrichtung ist insbesondere wenigstens teilweise (insbesondere deren Behälterwanne) integraler Bestandteil des Basiskörpers. Die Hebelaufnahme ist insbesondere integraler Bestandteil des Basiskörpers. Insbesondere ist wenigstens ein Abschnitt der Lenkeranbindung (insbesondere wenigstens einer der wenigstens zwei Anbindungsabschnitte) integraler Bestandteil des Basiskörpers.

Insbesondere umfasst der Basiskörper wenigstens das Zylindergehäuse, den Aufnahmeraum (bzw. ein Aufnahmeraumgehäuse), die Behälterwanne, die Hebelaufnahme und/oder wenigstens einen Teil der Lenkeranbindung. Insbesondere sind die zuvor genannten Komponenten einstückig miteinander verbunden. Insbesondere sind das Zylindergehäuse und wenigstens abschnittsweise die Ausgleichsbehältereinrichtung und wenigstens abschnittsweise die Lenkeranbindung und die Hebelaufnahme einstückig miteinander verbunden. Insbesondere stellen diese Komponenten den Basiskörper bereit oder sind zumindest Teil des Basiskörpers. Insbesondere kann der Basiskörper weitere Komponenten umfassen, welche einstückig daran ausgebildet sind.

Insbesondere ist der Behälterraum wenigstens abschnittsweise (insbesondere dessen Behälterwanne) im Basiskörper ausgebildet und vorzugsweise darin eingearbeitet. Insbesondere wird der Behälterraum wenigstens abschnittsweise durch eine Ausnehmung im Basiskörper bereitgestellt. Besonders bevorzugt sind der Aufnahmeraum und der Zylinderraum (und insbesondere wenigstens abschnittsweise auch der Behälterraum) mittels Materialabtrag vom Basiskörper hergestellt. Der Aufnahmeraum ist insbesondere von einem Aufnahmeraumgehäuse umgeben. Das Aufnahmeraumgehäuse ist vorzugsweise integraler Bestandteil des Basiskörpers. Das Aufnahmeraumgehäuse ist vorzugsweise einstückig mit dem Basiskörper verbunden.

Die Ausgleichsbohrung kann eine oder mehrere Einzelbohrungen umfassen bzw. durch mehrere Einzelbohrungen bereitgestellt werden. Wenn im Rahmen der vorliegenden Erfindung von der Ausgleichsbohrung die Rede ist, sind dann insbesondere alle Einzelbohrungen gemeint. Analog gilt dies insbesondere auch für eine Schmierbohrung. Auch die Belüftungsöffnung kann aus wenigstens zwei oder mehr Einzelbohrungen bestehen. Die Belüftungsöffnung kann auch nur eine Bohrung umfassen. Im Rahmen der vorliegenden Erfindung kann eine Bohrung mittels Bohren oder mittels eines anderen geeigneten Verfahrens und beispielsweise Fräsen oder dergleichen hergestellt werden. Im Rahmen der vorliegenden Erfindung wird unter einer Bohrung insbesondere wenigstens eine längliche (kanalartige) (Durchgangs-) Öffnung verstanden.

Der Aufnahmeraum hat insbesondere Zugang zur Atmosphäre. Insbesondere ist der Aufnahmeraum nicht gegenüber der Atmosphäre abgedichtet. Insbesondere ist der Aufnahmeraum teilweise offen ausgebildet. Insbesondere weist der Aufnahmeraum wenigstens eine Öffnung auf, durch welche sich der Nockenkörper zum Bremshebel erstreckt und/oder durch welche sich der Bremshebel zum Nockenkörper erstreckt. Insbesondere hat der Aufnahmeraum keinen Boden oder ist mit einer Öffnung im Boden ausgestattet. Der Aufnahmeraum kann auch einen geschlossenen Boden aufweisen.

Der Nockenkörper ist insbesondere mittels einer Nockenschwenkachse schwenkbar an einer Hebelaufnahme angebunden. Insbesondere sind der Pleuel und der Nockenkörper relativ zueinander schwenkbar. Insbesondere sind die Bremshebelschwenkachse und die Nockenschwenkachse identisch. Insbesondere haben der Bremshebel und der Nockenkörper eine gemeinsame Lagerstelle an der Hebelaufnahme. Insbesondere verläuft die Pleuelschwenkachse durch den Nockenkörper.

Es ist möglich und vorteilhaft, dass der Nockenkörper und der Bremshebel fest miteinander verbunden sind. Dann sind der Nockenkörper und der Bremshebel insbesondere nur gemeinsam bewegbar. Beispielsweise können der Nockenkörper und der Bremshebel einstückig miteinander verbunden sein. Der Nockenkörper und der Bremshebel können auch als separate Bauteile ausgebildet sein. Es ist auch möglich und vorteilhaft, dass der Nockenkörper und der Bremshebel relativ zueinander bewegbar sind. Vorzugsweise sind der Nockenkörper und der Bremshebel dann um eine gemeinsame Schwenkachse unabhängig voneinander schwenkbar.

Insbesondere ist die Gebereinheit an einem Lenker eines Fahrrades montierbar. Insbesondere umfasst die Bremsanordnung wenigstens eine Lenkeranbindung zur Montage der Gebereinheit an einem Lenker. Insbesondere ist die Lenkeranbindung wenigstens abschnittsweise einstückig mit dem Basiskörper verbunden. Insbesondere umfasst die Lenkeranbindung wenigstens zwei Anbindungsabschnitte, welche den Lenker wenigstens teilweise umschließen. Insbesondere ist wenigstens ein erster der wenigstens zwei Anbindungsabschnitte einstückig mit dem Basiskörper verbunden. Wenigstens ein zweiter der wenigstens zwei Anbindungsabschnitte ist insbesondere separat zum Basiskörper ausgebildet und vorzugsweise am Basiskörper lösbar befestigbar (z. B. verschraubbar). Die Lenkeranbindung kann auch zur direkten Montage der Gebereinheit am Lenker ausgebildet sein (z. B. durch Schrauben oder einlaminierte Aufnahmen/Flansche am Lenker).

Die Kolbeneinheit umfasst insbesondere einen Kolben (bzw. Kolbenkörper) und wenigstens eine Kolbendichtungseinrichtung. Der Kolben ist insbesondere einstückig ausgebildet. Der Kolben kann aber auch mehrteilig aufgebaut sein. Im Rahmen der vorliegenden Erfindung wird der Begriff "Kolbeneinheit" insbesondere so verwendet, dass damit der Kolben und die daran montierte Kolbendichtungseinrichtung gemeint sind.

Die Kolbendichtungseinrichtung umfasst insbesondere wenigstens eine umlaufend am Kolben angeordnete (erste) Kolbendichtung. Insbesondere dichtet die Kolbendichtung den Kolben gegenüber dem Zylindergehäuse ab. Insbesondere dichtet die Kolbendichtung den Druckraum gegenüber der Ausgleichsbohrung ab (wenn die Kolbeneinheit aufgrund einer Betätigung im Zylinderraum verschoben wird). Die Kolbendichtung kann auch als Primärdichtung bezeichnet werden.

Die Kolbendichtungseinrichtung umfasst insbesondere wenigstens eine weitere Kolbendichtung. Die weitere Kolbendichtung kann als Sekundärdichtung bezeichnet werden. Die weitere Kolbendichtung liegt insbesondere außerhalb des Druckraums. Die weitere Kolbendichtung liegt insbesondere beabstandet von der Primärdichtung. Die weitere Kolbendichtung liegt insbesondere zwischen der Primärdichtung und einem der Stützwand zugewandten Ende des Kolbens. Insbesondere dichtet die weitere Kolbendichtung einen Behälterraum gegenüber der Verbindungsöffnung und vorzugsweise gegenüber dem Aufnahmeraum ab.

Es ist vorteilhaft, dass eventuell vorhandene Bläschen praktisch immer nach oben schweben können. In allen Ausgestaltungen ist besonders bevorzugt, dass im montierten (und betriebsbereiten) Zustand die Einfüllöffnung (regelmäßig) am höchsten Punkt des Fluidraums (der Gebereinheit) angeordnet ist, wenn die Gebereinheit an einem Lenker angebracht ist. Dadurch können Luftblasen zuverlässig nach außen geleitet werden.

Insbesondere weist die Belüftungsöffnung wenigstens zwei Mündungen auf. Eine erste Mündung mündet in den Aufnahmeraum. Eine zweite Mündung mündet in den Luftraum. Insbesondere liegt die zweite Mündung tiefer als die erste Mündung. Insbesondere liegt die zweite Mündung unterhalb der ersten Mündung. Insbesondere können Flüssigkeit und/oder Schmutz schwerkraftbedingt aus der Belüftungsöffnung in den Aufnahmeraum ablaufen. Insbesondere verläuft die Belüftungsöffnung (in Bezug auf ihre Längsachse) quer zu einer Längsachse des Zylinderraums und/oder quer zu einer Längsachse eines Lenkers (wenn die Gebereinheit bestimmungsgemäß an einem Lenker montiert ist). Insbesondere verläuft die Belüftungsöffnung (in Bezug auf ihre Längsachse) geneigt zur Horizontalen (wenn die Gebereinheit bestimmungsgemäß an einem Lenker montiert ist). Zwischen den Mündungen bildet die Belüftungsöffnung insbesondere einen Kanal. Der Kanal ist insbesondere von einem Werkstoff des Basiskörpers umschlossen. Insbesondere ist die Belüftungsöffnung in einer Behälterwanne der Ausgleichsbehältereinrichtung ausgebildet. Das Zylindergehäuse ist vorzugsweise einstückig mit der Behälterwanne der Ausgleichsbehältereinrichtung verbunden.

Die Anschlussöffnung ist vorzugsweise mit wenigstens einer Fase ausgestattet. Vorzugsweise ist die Fase dazu geeignet und ausgebildet, eine an am Kolben montierte Kolbendichtungseinrichtung beim Einschieben der Kolbeneinheit in die Anschlussöffnung zu schützen und insbesondere zusammenzudrücken. Insbesondere ist die Fase an einem nehmerseitigen Ende des Zylinderraums angeordnet. Beispielsweise befindet sich die Fase am nehmerseitigen Ende einer Lauffläche für die Kolbeneinheit (sog. Zylinderlauffläche). Die Fase ist insbesondere an einem Übergang von einem ersten auf einen zweiten Durchmesser der Anschlussöffnung angeordnet, wobei der erste Durchmesser kleiner als der zweite Durchmesser ist. Insbesondere ist der erste Durchmesser der minimale Durchmesser der Anschlussöffnung und entspricht vorzugsweise dem Durchmesser des Zylinderraums. Insbesondere ist die Fase einstückig mit dem Zylindergehäuse ausgebildet.

Weitere Vorteile und Merkmale der vorliegenden Erfindung ergeben sich aus den Ausführungsbeispielen, die nachfolgend mit Bezug auf die beiliegenden Figuren erläutert werden.

In den Figuren zeigen:
- Fig. 1: eine schematische Darstellung eines Mountainbikes mit einer anmeldungsgemäßen Bremsanordnung;
- Fig. 2: eine schematische Darstellung eines Rennrades mit einer anmeldungsgemäßen Bremsanordnung;
- Fig. 3: eine schematische Darstellung einer anmeldungsgemäßen Bremsanordnung an einem Lenker eines Fahrrads in einer Draufsicht;
- Fig. 4: die Bremsanordnung in einer vergrößerten und geschnittenen Draufsicht;
- Fig. 5: die Bremsanordnung in einer in Längsrichtung geschnittenen perspektivischen Seitenansicht von schräg oben;
- Fig. 6: die Bremsanordnung in einer geschnittenen Seitenansicht;
- Fig. 7: die Bremsanordnung in einer geschnittenen Seitenansicht in einer bestimmungsgemäßen Montageposition;
- Fig. 8: eine im Bereich der Ausgleichsbehältereinrichtung quer zur Längsrichtung geschnittene Detaildarstellung der Bremsanordnung;
- Fig. 9: eine Detaildarstellung der Membraneinheit der Bremsanordnung in einer perspektivischen Ansicht;
- Fig. 10: eine Detaildarstellung der Bremsanordnung in einer geschnittenen perspektivischen Seitenansicht von schräg vorne; und
- Fig. 11: eine Darstellung eines vergrößerten Ausschnitts der Figur 6.

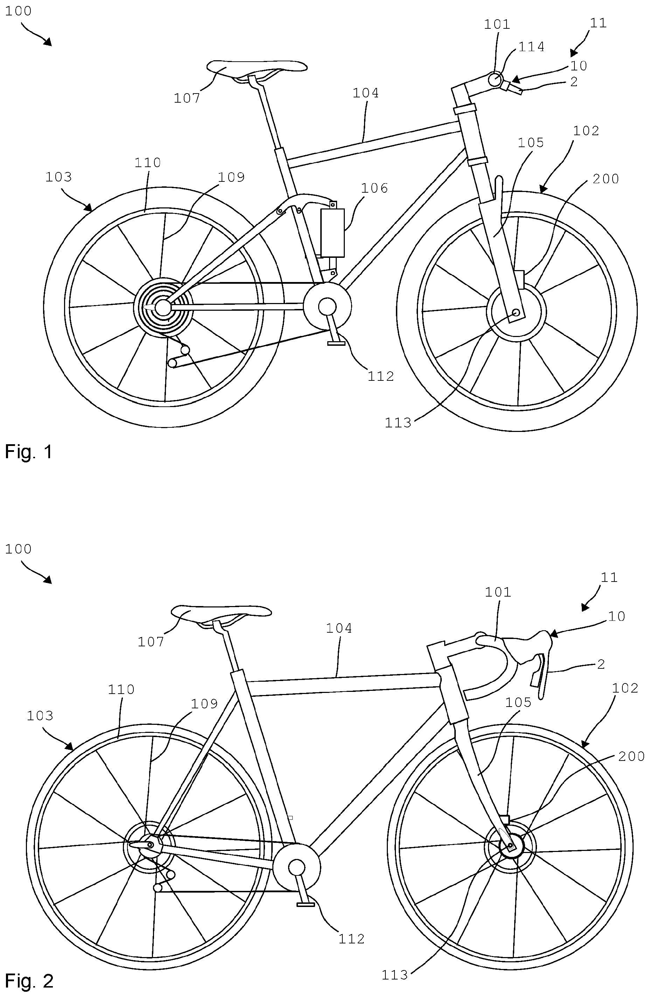

In den Figuren 1 und 2 sind als Mountainbike bzw. Rennrad ausgebildete Fahrräder 100 dargestellt, die jeweils mit einer anmeldungsgemäßen hydraulischen Bremsanordnung 1 ausgerüstet sind. Die Fahrräder 100 verfügen jeweils über ein Vorderrad 102 und ein Hinterrad 103, die über jeweils einen separaten Hydraulikkreis 11 einzeln gebremst werden können. Dazu umfassen die Hydraulikkreise 11 jeweils eine Gebereinheit 10 und eine Nehmereinheit 200.

Ein Fahrrad 100 verfügt über einen Rahmen 104, einen Lenker 101 mit Griffen 114, einen Sattel 107, eine Gabel bzw. Federgabel 105 und im Falle des Mountainbikes kann ein Hinterraddämpfer 106 vorgesehen sein. Zum Antrieb dient eine Tretkurbel 112 mit Pedalen. Gegebenenfalls kann ein elektrischer Hilfsantrieb an der Tretkurbel 112 und/oder den Rädern 102, 103 vorgesehen sein. Die Naben der Räder 102, 103 können jeweils über ein Spannsystem 113 (zum Beispiel eine Steckachse oder einen Schnellspanner) an dem Rahmen 104 bzw. der Gabel 105 befestigt sein.

An dem Rahmen 104 und an der Gabel 105 ist jeweils eine hier als hydraulische Scheibenbremse ausgebildete Nehmereinheit 200 befestigt. Die Nehmereinheit 200 ist über eine hier nicht sichtbare Leitungseinrichtung 201 mit der zugehörigen Gebereinheit 10 verbunden, sodass sich ein geschlossener Hydraulikkreis 11 ergibt. Die Gebereinheiten 10 eines Fahrrads 100 sind an gegenüberliegenden Enden des Lenkers 101 montiert und weisen jeweils einen mit den Fingern betätigbaren Bremshebel 2 auf. Bei dem Rennrad 100 ist die Gebereinheit 10 als eine Schalt-Brems-Kombination ausgebildet.

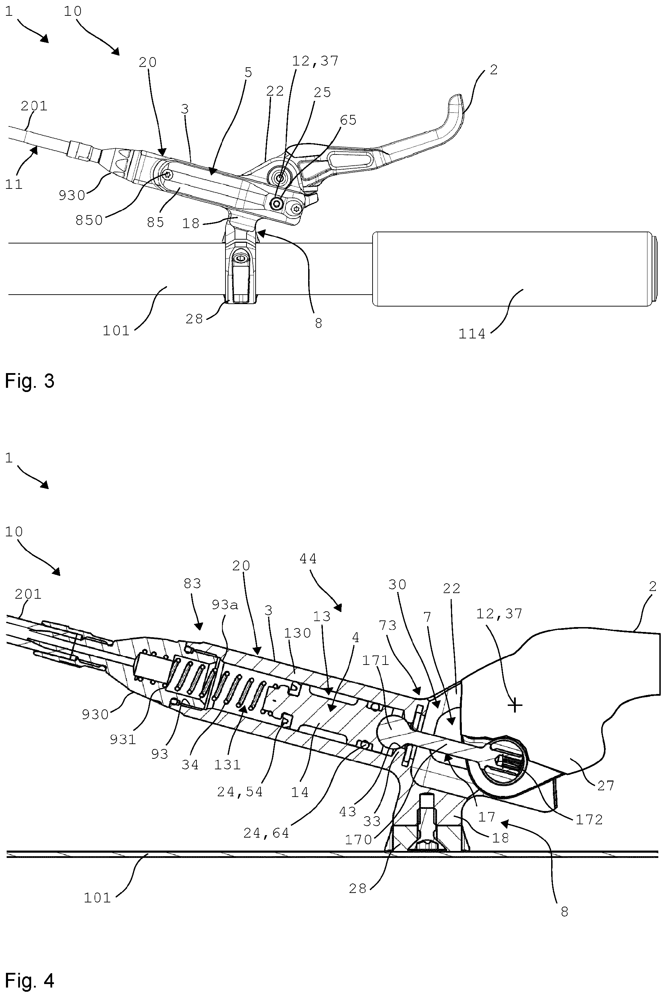

Die anmeldungsgemäße Bremsanordnung 1 wird nun mit Bezug zu den verschiedenen Darstellungen der Figuren 3 bis 11 näher beschrieben.

Die Bremsanordnung 1 umfasst eine Gebereinheit 10, welche über eine Leitungseinrichtung 201 mit einer hier nicht dargestellten Nehmereinheit 200 und beispielsweise einer Scheibenbremse verbunden ist. Die Gebereinheit 10 ist hier mittels einer Lenkeranbindung 8 an einem Lenker 101 eines Fahrrads 100 befestigt, wie es zuvor beschrieben wurde.

Die Lenkeranbindung 8 umfasst hier zwei Anbindungsabschnitte 18, 28. Der erste Anbindungsabschnitt 18 ist integraler Bestandteil eines Basiskörpers 20. Der zweite Anbindungsabschnitt 28 ist an dem ersten Anbindungsabschnitt 18 verschraubt und umfasst hier zwei Teile, welche über ein Scharnier schwenkbar aneinander gekoppelt sind.

Die Gebereinheit 10 umfasst ein Zylindergehäuse 3 mit einem Zylinderraum 13 und eine in dem Zylinderraum 13 verschiebbar aufgenommene Kolbeneinheit 4. Auch das Zylindergehäuse 3 ist integraler Bestandteil des Basiskörpers 20.

An einer ebenfalls im Basiskörper 20 integrierten Hebelaufnahme 22 ist ein Bremshebel 2 gelagert, sodass dieser um eine Bremshebelschwenkachse 12 verschwenkt werden kann. Der Bremshebel 2 ist mittels einer Betätigungsmechanik 7 an die Kolbeneinheit 4 gekoppelt. Durch ein Ziehen am Bremshebel 2 wird die Kolbeneinheit 4 im Zylinderraum 13 verschoben.

Die Betätigungsmechanik 7 umfasst hier einen Pleuel 17 mit einer Pleuelstange 170 und einem Pleuelkopf 171 sowie einem Nockenkörper 27. Der Nockenkörper 27 ist an der Hebelaufnahme 22 gelagert, sodass er um eine Nockenschwenkachse 37 verschwenkt werden kann. Die Bremshebelschwenkachse 12 und die Nockenschwenkachse 37 sind hier identisch. Der Pleuel 17 ist um eine Pleuelschwenkachse 172 schwenkbar am Nockenkörper 27 angebunden. Der Nockenkörper 27 ist in einem Aufnahmeraum 30 des Basiskörpers 20 untergebracht. Der Nockenkörper 27 ist hier einstückig mit dem Bremshebel 2 ausgebildet.

Das Zylindergehäuse 3 weist ein hebelseitiges Ende 73 und ein nehmerseitiges Ende 83 auf. Dabei liegt der Aufnahmeraum 30 auf einer gemeinsamen Längsachse mit dem Zylinderraum 13. An dem nehmerseitigen Ende 83 ist eine Anschlussöffnung 93 zum Koppeln der Leitungseinrichtung 201 ausgebildet. An dem hebelseitigen Ende 73 ist eine Verbindungsöffnung 43 ausgebildet, durch welche sich die Pleuelstange 170 vom Aufnahmeraum 30 aus in den Zylinderraum 13 zur Kolbeneinheit 4 erstreckt. Die Verbindungsöffnung 43 ist in einer Stützwand 33 ausgebildet, welche einstückig mit dem Zylindergehäuse 3 verbunden ist.

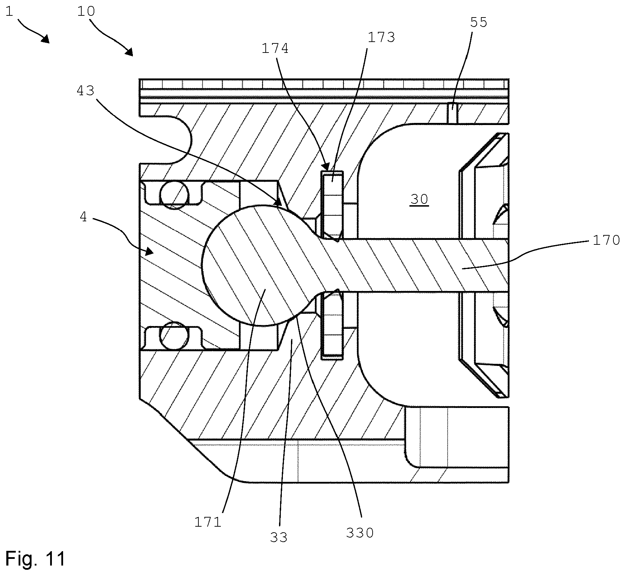

Die Kolbeneinheit 4 umfasst einen Kolben 14 und eine Kolbendichtungseinrichtung 24, welche durch eine Primärdichtung 54 und eine Sekundärdichtung 64 bereitgestellt wird. Die Kolbeneinheit 4 befindet sich hier in einer Ruheposition 44, da die Gebereinheit 10 nicht betätigt wird. In der Ruheposition 44 liegt der Pleuelkopf 171 an einem Kontaktabschnitt 330 der Stützwand 33 an (vgl. Fig. 11). Dabei liegt die Kolbeneinheit 4 mit ihrem hebelseitigen Ende an dem Pleuelkopf 171 an.

An dem gegenüberliegenden Ende der Kolbeneinheit 4 liegt ein hier als Feder ausgebildetes Vorspannelement 34 an. Das Vorspannelement 34 stützt sich an einem Stützkragen 931 einer Anschlusseinheit 930 ab. Die Anschlusseinheit 930 ist in das nehmerseitige Ende 83 des Zylindergehäuses 3 eingeschraubt, sodass das Hydraulikfluid nur über die Anschlusseinheit 930 und die daran angebundene Leitungseinrichtung 201 aus dem Zylinderraum 13 austreten kann. Zwischen der Anschlusseinheit 930 und dem Zylindergehäuse 3 ist eine Dichtung 932 angeordnet, sodass das Gewinde nicht zwingend abdichten muss.

Zur Bevorratung eines Hydraulikfluids ist eine Ausgleichsbehältereinrichtung 5 mit einem Behälterraum 15 vorgesehen. Als Hydraulikfluid ist hier ein biologisch abbaubares Öl vorgesehen. Alternativ können auch ein mineralisches Öl oder eine Bremsflüssigkeit (DOT) vorgesehen sein. Die Ausgleichsbehältereinrichtung 5 umfasst eine Behälterwanne 75 und einen Deckel 85. Die Behälterwanne 75 ist integraler Bestandteil des Basiskörpers 20.

Im Deckel 85 ist eine Einfüllöffnung 25, welche hier zugleich auch als Entlüftungsöffnung 65 zum Entlüften des Hydraulikkreises 11 im Rahmen von Wartungsarbeiten dient. Der Deckel 85 der Ausgleichsbehältereinrichtung 5 ist hier mit zwei Schrauben 850 an der Behälterwanne 75 befestigt. Zum Verschließen der Einfüllöffnung 25 bzw. der Entlüftungsöffnung 65 ist hier ebenfalls eine Schraube 850 vorgesehen.

In dem Behälterraum 15 ist eine Membraneinheit 6 angeordnet, welche den Behälterraum 15 in einen Fluidraum 35 für das Hydraulikfluid und einen Luftraum 45 unterteilt. Dabei dichtet die Membraneinheit 6 den Fluidraum 35 gegenüber dem Luftraum 45 ab.

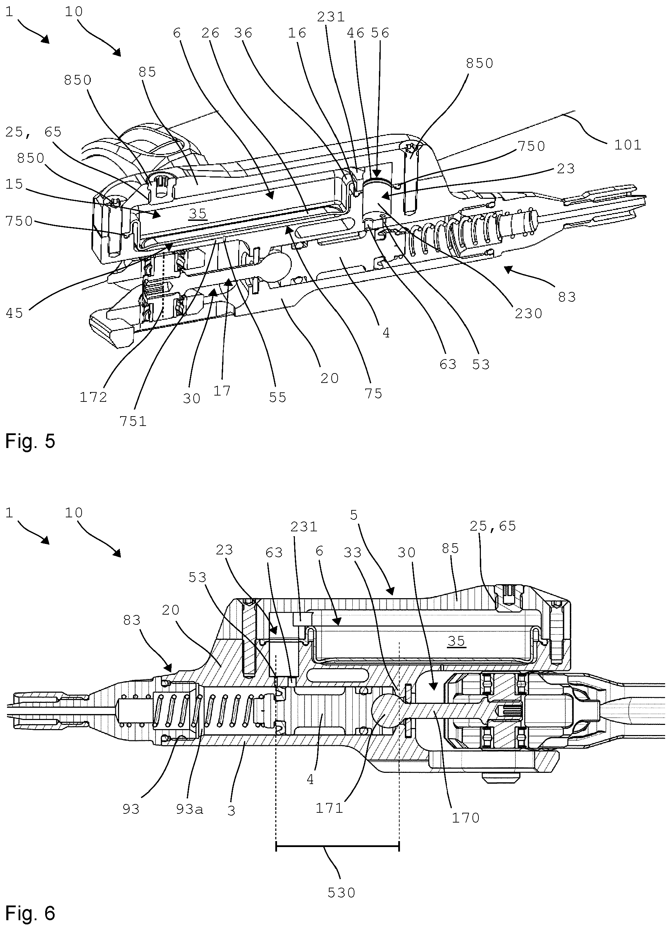

Die Kolbeneinheit 4 und das Zylindergehäuse 3 begrenzen hier einen Druckraum 131, welcher einen Teil des Zylinderraums 13 bildet. Der Druckraum 131 ist über eine in einer Zylinderwandung 130 des Zylindergehäuses 3 ausgebildete Ausgleichsbohrung 53 mit dem Fluidraum 35 verbunden. Die Ausgleichsbohrung 53 besteht hier rein beispielhaft aus insgesamt drei Einzelbohrungen. In der Schnittdarstellung der Figur 5 verläuft die Schnittebene durch die zentrale Bohrung der drei Bohrungen.

Die Ausgleichsbohrung 53 liegt frei, wenn die Kolbeneinheit 4 in der Ruheposition 44 ist. Bei einer Betätigung der Gebereinheit 10 dichtet die Kolbeneinheit 4 mit ihrer Primärdichtung 54 den Druckraum 131 gegenüber dem Fluidraum 35 ab. Dadurch kann der Druckraum 131 mit Druck beaufschlagt werden, wenn weiter am Bremshebel 2 gezogen wird. Dann wird die Nehmereinheit 200 betätigt und beispielsweise ein Kolben einer Scheibenbremse ausgefahren.

Zusätzlich zu der Ausgleichsbohrung 53 ist der Zylinderraum 13 über eine Schmierbohrung 63 mit dem Fluidraum 35 verbunden. Dabei mündet die Schmierbohrung 63 in einen außerhalb des Druckraums 131 liegenden Teil des Zylinderraums 13. Über die Schmierbohrung 63 kann Hydraulikfluid hinter die Primärdichtung 54 gelangen, um dort die Kolbeneinheit 4 zu schmieren. Zudem kann das Hydraulikfluid über die Schmierbohrung 63 wieder zurück in den Behälterraum 15 strömen, wenn es hinter die Primärdichtung 54 gelangt ist. Die Schmierbohrung 63 wird durch die Sekundärdichtung 64 zur Verbindungsöffnung 43 und dem dahinter liegenden Aufnahmeraum 30 abgedichtet.

Die Ausgleichsbohrung 53 und die Schmierbohrung 63 sind hier Teil einer Kanalverbindung 23, welche den Fluidraum 35 mit dem Zylinderraum 13 verbindet. Die Ausgleichsbohrung 53 und die Schmierbohrung 63 verlaufen dabei von einem Zentralkanal 230 der Kanalverbindung 230 aus in den Zylinderraum 15. Der Zentralkanal 230 ist über einen im Deckel 85 ausgebildeten Querkanal 231 mit dem Fluidraum 35 verbunden. Der Zentralkanal 230 und die Ausgleichsbohrung 53 und die Schmierbohrung 63 sind hier im Basiskörper 20 ausgebildet.

Der Luftraum 45 ist über eine Belüftungsöffnung (und insbesondere z. B. eine Belüftungsbohrung) 55 mit der Atmosphäre verbunden. So werden Druckänderungen ausgeglichen, wenn die Menge an Hydraulikfluid im Fluidraum 35 zunimmt oder abnimmt und sich dadurch die Membraneinheit 6 nach unten bzw. oben wölbt. Die Belüftungsöffnung 55 ist hier im Boden 751 der Behälterwanne 75 ausgebildet und mündet in den Aufnahmeraum 30. Dadurch ist die Belüftungsöffnung 55 im Bereich ihrer Mündung vom Basiskörper 20 umgeben und somit gut geschützt im Aufnahmeraum 30 untergebracht.

Bei der hier gezeigten Gebereinheit 120 schneidet eine gedachte Verlängerung der Längsachse der Belüftungsöffnung 55 die Pleuelstange 170. Zudem verlaufen die Pleuelschwenkachse 172 und die Belüftungsöffnung 55 parallel zueinander. Die Bremshebelschwenkachse 12 verläuft parallel zur Längsachse der Belüftungsöffnung 55. Zudem weisen die Belüftungsöffnung 55, die mittlere der drei Ausgleichsbohrungen 53 und die Schmierbohrung 63 und der Zentralkanal 230 Längsachsen auf, welche parallel zueinander verlaufen. Die Ausgleichsbehältereinrichtung 5 und der Zylinderraum 13 weisen Längsachsen auf, welche parallel zueinander verlaufen.

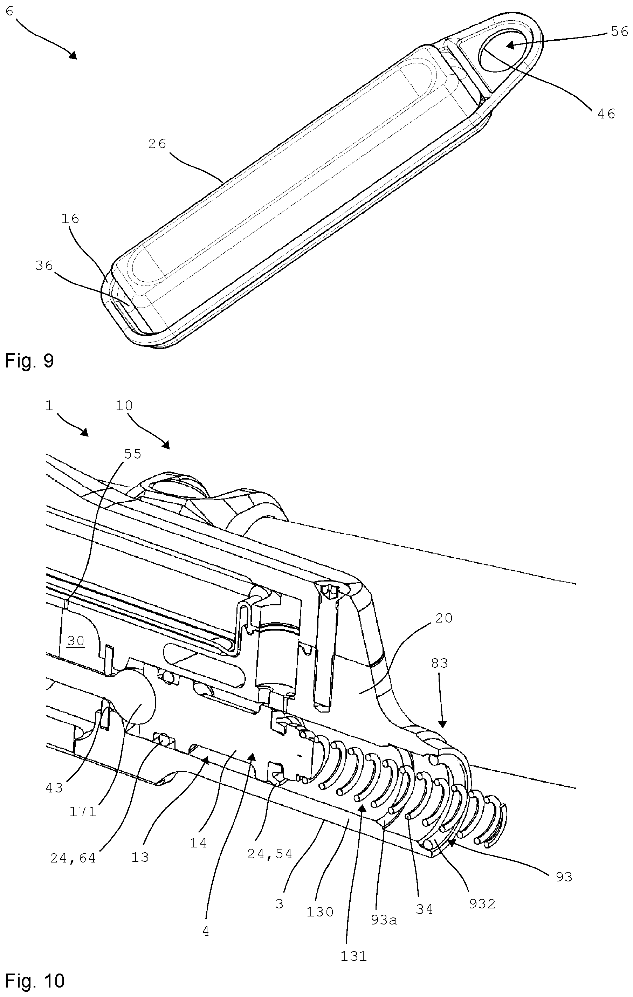

Die Membraneinheit 6 ist einstückig ausgebildet und umfasst hier eine Behälterdichtung 16 und ein Membranelement 26 und ein Verbindungselement 36 sowie eine Kanaldichtung 46. Die Membraneinheit 6 ist in der Detaildarstellung der Figur 9 besonders gut zu erkennen.

Im bestimmungsgemäßen Montagezustand erstreckt sich die Behälterdichtung 16 zwischen der Behälterwanne 75 und dem Deckel 85, sodass diese abgedichtet aneinander montiert sind. Das Membranelement 26 ist von der Behälterdichtung 16 umgeben und zwischen dem Fluidraum 35 und dem Luftraum 45 aufgespannt.

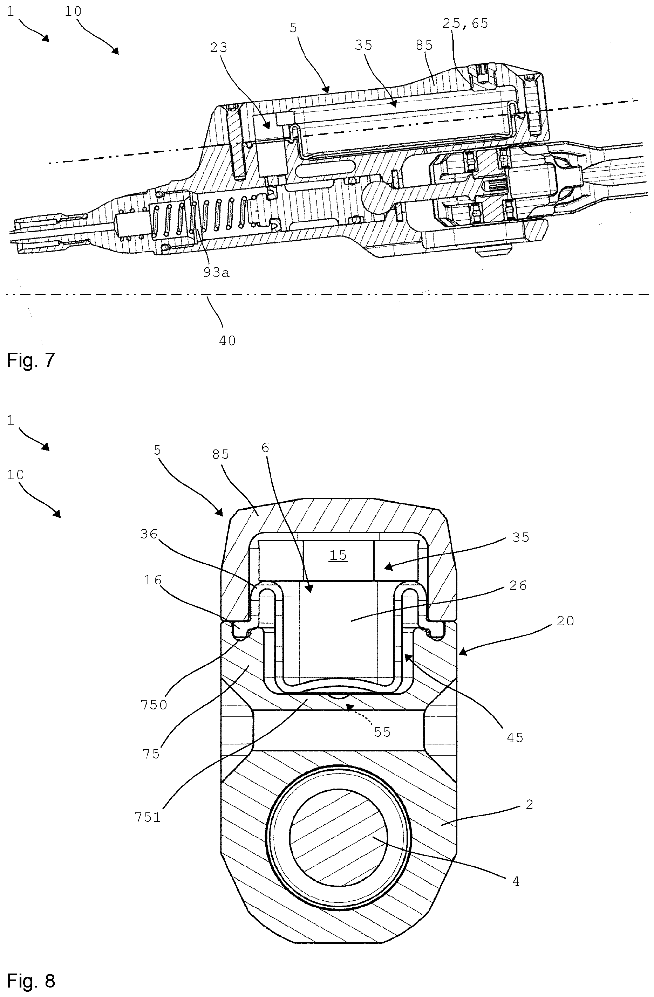

Das Verbindungselement 36 ist bogenförmig ausgebildet und verbindet das Membranelement 26 mit der Behälterdichtung 16. Dabei spannt das Verbindungselement 36 das Membranelement 26 im Bereich eines umlaufenden Bodenrandes gegen den Boden 751 der Behälterwanne 75 vor (vgl. Fig. 8). Im Bereich der Belüftungsöffnung 55 ist das Membranelement 26 hier gewölbt ausgebildet, sodass es dort beabstandet vom Boden 751 angeordnet ist.

Die Behälterdichtung 16 ist in einer Aufnahmenut 750 der Behälterwanne 75 aufgenommen. Da die Behälterwanne 75 und der Deckel 85 im Bereich der Aufnahmenut 750 beabstandet sind, kann die Behälterdichtung 16 auch bei einem Stoß auf den Deckel 85 nicht abgeschert werden. Im Bereich der Kanaldichtung 46 verläuft die Behälterdichtung 16 zwischen der Kanaldichtung 46 und dem Membranelement 26. Zudem weist der Basiskörper 20 im Bereich der Kanaldichtung 46 ebenfalls eine Aufnahmenut 750 auf, um ein Abscheren der Kanaldichtung 46 zu vermeiden.

Die Kanaldichtung 46 dient dazu, die Kanalverbindung 23 zum Deckel 85 und zum Basiskörper 20 abzudichten. Da sich die Kanalverbindung 23 hier vom Fluidraum 35 aus durch den Deckel 85 und weiter durch den Basiskörper 20 zum Zylinderraum 13 erstreckt, muss das Hydraulikfluid nicht durch das Membranelement 26 hindurchströmen. Das Hydraulikfluid kann hier die Membraneinheit 6 außerhalb der Behälterdichtung 16 passieren.

Dazu tritt das Hydraulikfluid durch eine in der Kanaldichtung 46 ausgebildete Durchgangsöffnung 56 durch die Membraneinheit 6 hindurch. Dadurch kann auf eine Durchführung im Membranelement 26 verzichtet werden, welche meist nur sehr aufwendig abgedichtet werden kann. Dennoch müssen keine zusätzlichen Abdichtungen verbaut werden, da die Membraneinheit 6 zugleich auch die Kanaldichtung 46 bereitstellt.

Der Luftraum 45 ist hier unterhalb des Fluidraums 35 ausgebildet. Die Einfüllöffnung 25 mündet dabei direkt in den Fluidraum 35, sodass die Membraneinheit 6 zum Nachfüllen des Hydraulikfluids nicht entfernt werden muss. Da die Einfüllöffnung 24 zugleich auch als Entlüftungsöffnung 65 ausgebildet ist, muss die Membraneinheit 6 auch zum Entlüften nicht demontiert werden.

Wie in der Figur 7 gut zu erkennen ist, weist die Ausgleichsbehältereinrichtung (bzw. die Gebereinheit 10 insgesamt) eine Längsachse auf (in der Figur 7 strichpunktiert eingezeichnet), welche zur Horizontalen 40 geneigt ist, wenn die Gebereinheit 10 bestimmungsgemäß an einem Lenker 101 des Fahrrads 100 montiert ist. Dadurch ist der Endabschnitt der Ausgleichsbehältereinrichtung 5, an welchem die Einfüllöffnung 25 und die Entlüftungsöffnung 65 angeordnet sind, höher als der gegenüberliegende Endabschnitt. Somit sammelt sich das Hydraulikfluid im Bereich der Kanalverbindung 23, während sich eventuell im Fluidraum 35 vorhandene Luft an dem Endabschnitt mit der Einfüllöffnung 25 bzw. der Entlüftungsöffnung 65 sammelt. Die Kanalverbindung 23 und die Einfüllöffnung 25 sind hier an in Längsrichtung gegenüberliegenden Endabschnitten der Ausgleichsbehältereinrichtung 5 angeordnet.

Bei der Herstellung der hier gezeigten Bremsanordnung 1 wird der Basiskörper 20 durch gezielten Materialabtrag aus einem Basiskörper-Rohling hergestellt. Dadurch entsteht der hier gezeigte Basiskörper 20, in den das Zylindergehäuse 3 mit dem Zylinderraum 13 und der Stützwand 33 und dem Kontaktabschnitt 330, die Hebelaufnahme 22 und die Behälterwanne 75 der Ausgleichsbehältereinrichtung 5 sowie der Aufnahmeraum 30 und die entsprechenden Bohrungen bzw. Kanäle fest integriert sind.

Nach der Ausarbeitung des Zylinderraums 13 ist die Stützwand 33 von der Anschlussöffnung 93 aus sehr gut und einfach mit Werkzeugen zugänglich. So kann die Kontaktfläche 330 von der Anschlussöffnung 93 aus unaufwendig und zugleich mit hoher Präzision bearbeitet werden. Zuvor oder anschließend kann die Verbindungsöffnung 43 ebenfalls über die Anschlussöffnung 93 oder auch vom Aufnahmeraum 30 aus hergestellt werden. Die Ausgleichsbohrung 53 kann zeitlich vor oder auch zeitlich nach der Herstellung des Kontaktabschnitts 330 hergestellt werden.

In jedem Fall werden die Ausgleichsbohrung 53 und der Kontaktabschnitt 330 in einem definierten Abstand 530 zueinander in den Basiskörper 20 eingearbeitet (vgl. Fig. 6). Bei noch nicht montiertem Deckel 85 kann die Ausgleichsbohrung 53 sehr unaufwendig und mit hoher Präzision im Basiskörper 20 positioniert werden, sodass der Abstand 530 mit besonders geringer Toleranz eingehalten werden kann. Bei gegebenen Dimensionen der Kolbeneinheit 4 und des Pleuels 17 wird der Totweg über den Abstand 530 definiert. Da bei der Erfindung der Abstand 530 genau eingehalten werden kann, wird auch der Totweg mit besonders geringen Toleranzen festgelegt.

Nach der Fertigstellung des Zylinderraums 13 wird die Kolbeneinheit 4 im vormontierten Zustand (der Kolben 14 mit montierter Kolbendichtungseinrichtung 24) durch die Anschlussöffnung 93 in den Zylinderraum 13 eingesetzt. Der minimale Durchmesser der Anschlussöffnung 93 ist auf den maximalen Durchmesser der Querschnittsgeometrie der Kolbeneinheit 4 abgestimmt. Zum Schutz der Kolbendichtungseinrichtung 24 beim Einschieben ist die Anschlussöffnung 93 hier mit einer Fase 93a ausgestattet.

Zuvor wird der Pleuel 17 mit der Pleuelstange 170 voran durch die Anschlussöffnung 93 in den Zylinderraum 13 eingesetzt. Die Pleuelstange 171 wird durch die Verbindungsöffnung 43 aus dem Zylinderraum 13 wieder herausgeführt und im Aufnahmeraum 30 mit dem Nockenkörper 27 verbunden.

Auf einer vom Zylinderraum 13 abgewandten Seite der Verbindungsöffnung 43 wird eine Dichtungsnut 174 in den Basiskörper 20 eingearbeitet. In die Dichtungsnut 174 wird ein Dichtungselement 173 eingesetzt, durch welches sich die Pleuelstange 170 erstreckt. Dadurch wird der Zylinderraum 13 zum Aufnahmeraum 30 hin abgedichtet.

Nach dem Einsetzen der Kolbeneinheit 4 in den Zylinderraum 13 wird über die Anschlussöffnung 93 das Vorspannelement 34 eingesetzt (vgl. Fig. 10). Anschließend wird die Anschlusseinheit 930 eingeschraubt und dadurch das Vorspannelement 34 zusammengedrückt. Durch das Vorspannelement 34 wird die Kolbeneinheit 4 in der Ruheposition 44 so vorgespannt, dass der Pleuelkopf 171 gegen den Kontaktabschnitt 330 der Stützwand 33 gedrückt wird.

Die hier gezeigte Gebereinheit 10 ermöglicht aufgrund ihres besonderen konstruktiven Aufbaus einen Wechsel der Kolbendichtungseinrichtung 24 bzw. des Kolbens 14 innerhalb kürzester Zeit und für geübte Personen beispielsweise in weniger als einer Minute. Um Zugang zur Kolbeneinheit 4 zu bekommen, muss lediglich die Anschlusseinheit 930 abgeschraubt werden. Da die Kolbeneinheit 4 nur lose am Pleuel 17 (vorgespannt) anliegt, kann die Kolbeneinheit 4 ganz einfach durch die Anschlussöffnung 93 aus den Zylinderraum 13 herausgezogen werden. Nach dem Anbringen beispielsweise einer neuen Primärdichtung 54 kann die Kolbeneinheit 4 ebenso einfach wieder in den Zylinderraum 13 eingesetzt werden.

Nach dem Einsetzen des Vorspannelements 34 und dem Verschrauben der Anschlusseinheit 930 ist die Gebereinheit 10 dann wieder fertig montiert. Aufgrund des fest in den Basiskörper 20 integrierten Abstands 530 und der einstückig im Basiskörper 20 ausgebildeten Stützwand 33 mit ihrem Kontaktabschnitt 330 ist der Totweg dann auch automatisch wieder optimal eingestellt. Ein anschließendes Befüllen und Entlüften des Hydraulikkreises 11 kann aufgrund der hier beschriebenen Ausgleichsbehältereinrichtung 5 und der Membraneinheit 6 sehr einfach und sicher erfolgen.

### Bezugszeichenliste:

| | | | |
|---|---|---|---|
| 1 | Bremsanordnung | 64 | Sekundärdichtung |
| 2 | Bremshebel | 65 | Entlüftungsöffnung |
| 3 | Zylindergehäuse | 73 | Ende |
| 4 | Kolbeneinheit | 75 | Behälterwanne |
| 5 | Ausgleichsbehältereinrichtung | 83 | Ende |
| | | 85 | Deckel |
| 6 | Membraneinheit | 93 | Anschlussöffnung |
| 7 | Betätigungsmechanik | 93a | Fase |
| 8 | Lenkeranbindung | 100 | Fahrrad |
| 10 | Gebereinheit | 101 | Lenker |
| 11 | Hydraulikkreis | 102 | Rad, Vorderrad |
| 12 | Bremshebelschwenkachse | 103 | Rad, Hinterrad |
| 13 | Zylinderraum | 104 | Rahmen |
| 14 | Kolben | 105 | Gabel, Federgabel |
| 15 | Behälterraum | 106 | Hinterraddämpfer |
| 16 | Behälterdichtung | 107 | Sattel |
| 17 | Pleuel | 109 | Speiche |
| 18 | Anbindungsabschnitt | 110 | Felge |
| 20 | Basiskörper | 112 | Tretkurbel |
| 22 | Hebelaufnahme | 113 | Spannsystem |
| 23 | Kanalverbindung | 114 | Griff |
| 24 | Kolbendichtungseinrichtung | 130 | Zylinderwandung |
| 25 | Einfüllöffnung | 131 | Druckraum |
| 26 | Membranelement | 170 | Pleuelstange |
| 27 | Nockenkörper | 171 | Pleuelkopf |
| 28 | Anbindungsabschnitt | 172 | Pleuelschwenkachse |
| 30 | Aufnahmeraum | 173 | Dichtungselement |
| 33 | Stützwand | 174 | Dichtungsnut |
| 34 | Vorspannelement | 200 | Nehmereinheit |
| 35 | Fluidraum | 201 | Leitungseinrichtung |
| 36 | Verbindungselement | 230 | Zentralkanal |
| 37 | Nockenschwenkachse | 231 | Querkanal |
| 40 | Horizontale | 330 | Kontaktabschnitt |
| 43 | Verbindungsöffnung | 530 | Abstand |
| 44 | Ruheposition | 750 | Aufnahmenut |
| 45 | Luftraum | 751 | Boden |
| 46 | Kanaldichtung | 850 | Schraube |
| 53 | Ausgleichsbohrung | 930 | Anschlusseinheit |
| 54 | Primärdichtung | 931 | Stützkragen |
| 55 | Belüftungsöffnung | 932 | Dichtung |
| 56 | Durchgangsöffnung | | |
| 63 | Schmierbohrung | | |

## Patentansprüche

1. Hydraulische Bremsanordnung (1) für ein wenigstens teilweise muskelbetriebenes Fahrrad (100), umfassend wenigstens eine mit einer Nehmereinheit (200) fluidisch verbindbare Gebereinheit (10), wobei die Gebereinheit (10) einen Bremshebel (2) und ein Zylindergehäuse (3) mit einem Zylinderraum (13) und eine in dem Zylinderraum (13) verschiebbar aufgenommene Kolbeneinheit (4) und wenigstens eine Ausgleichsbehältereinrichtung (5) für ein Hydraulikfluid aufweist, wobei die Ausgleichsbehältereinrichtung (5) einen Behälterraum (15) und wenigstens eine Einfüllöffnung (25) zum Einfüllen des Hydraulikfluids umfasst und wobei in dem Behälterraum (15) wenigstens eine Membraneinheit (6) angeordnet ist, welche den Behälterraum (15) in einen Fluidraum (35) für das Hydraulikfluid und einen gegenüber dem Fluidraum (35) abgedichteten Luftraum (45) unterteilt, wobei zwischen dem Fluidraum (35) und dem Zylinderraum (13) wenigstens eine Kanalverbindung (23) ausgebildet ist und wobei der Luftraum (45) über wenigstens eine Belüftungsöffnung (55) mit der Atmosphäre verbunden ist, sodass ein Druckausgleich zwischen Luftraum (45) und Atmosphäre möglich ist, und wobei die Einfüllöffnung (25) bei montierter Membraneinheit (6) fluidisch mit dem Fluidraum (35) verbunden ist,
wobei die Belüftungsöffnung (55) in einen von einem einstückig ausgebildeten Basiskörper (20) der Gebereinheit (10) wenigstens teilweise umschlossenen Aufnahmeraum (30) mündet und, wobei das Zylindergehäuse (3) integraler Bestandteil des Basiskörpers (20) ist und, wobei in dem Aufnahmeraum (30) eine Betätigungsmechanik (7) wenigstens teilweise angeordnet ist, welche zur Kraftübertragung vom Bremshebel (2) auf die Kolbeneinheit (4) dient, **dadurch gekennzeichnet, dass** die Belüftungsöffnung (55) im Basiskörper (20) verläuft.

2. Bremsanordnung (1) nach dem vorhergehenden Anspruch, wobei eine gedachte Verlängerung einer Längsachse der Belüftungsöffnung (55) die Betätigungsmechanik (7) und vorzugsweise einen Pleuel (17) der Betätigungsmechanik (7) schneidet.

3. Bremsanordnung (1) nach einem der vorhergehenden Ansprüche, wobei in dem Aufnahmeraum (30) ein Nockenkörper (27) wenigstens teilweise untergebracht ist und wobei ein Pleuel (17) schwenkbar am Nockenkörper (27) angebunden ist und wobei die Belüftungsöffnung (55) zwischen dem Nockenkörper (27) und einer Stützwand (33) in den Aufnahmeraum (30) mündet, wobei in der Stützwand (33) eine Verbindungsöffnung (43) ausgebildet ist, durch welche sich die Betätigungsmechanik (7) vom Aufnahmeraum (30) aus in den Zylinderraum (13) zur Kolbeneinheit (4) erstreckt.

4. Bremsanordnung (1) nach dem vorhergehenden Anspruch, wobei der Pleuel (17) um eine Pleuelschwenkachse (172) schwenkbar am Nockenkörper (27) angebunden ist und wobei die Pleuelschwenkachse (172) und eine Längsachse der Belüftungsöffnung (55) in einer gemeinsamen Ebene verlaufen.

5. Bremsanordnung (1) nach einem der vorhergehenden Ansprüche, wobei der Bremshebel (2) um eine Bremshebelschwenkachse (12) schwenkbar an einer Hebelaufnahme (22) angebunden ist und wobei die Belüftungsöffnung (55) eine Längsachse aufweist, welche in einer Ebene mit der Bremshebelschwenkachse (12) liegt.

6. Bremsanordnung (1) nach dem vorhergehenden Anspruch, wobei die Bremshebelschwenkachse (12) durch den Aufnahmeraum (30) verläuft.

7. Bremsanordnung (1) nach einem der vorhergehenden Ansprüche, wobei die Belüftungsöffnung (55) und die Kanalverbindung (23) Längsachsen aufweisen, welche in einer gemeinsamen Ebene verlaufen.

8. Bremsanordnung (1) nach einem der vorhergehenden Ansprüche, wobei sich eine gedachte axiale Verlängerung des Zylinderraums (13) durch den Aufnahmeraum (30) erstreckt.

9. Bremsanordnung (1) nach einem der vorhergehenden Ansprüche, wobei die Ausgleichsbehältereinrichtung (5) oberhalb des Zylinderraums (13) und des Aufnahmeraums (30) angeordnet ist und wobei die Ausgleichsbehältereinrichtung (5) und der Zylinderraum (13) und/oder der Aufnahmeraum (30) Längsachsen aufweisen, welche in einer gemeinsamen Ebene verlaufen.

10. Bremsanordnung (1) nach einem der vorhergehenden Ansprüche, wobei die Einfüllöffnung (25) auch als eine Entlüftungsöffnung (65) zum Entlüften eines Hydraulikkreises (11) ausgebildet ist und wobei eine Entlüftung bei bestimmungsgemäß montierter Membraneinheit (6) möglich ist.

11. Bremsanordnung (1) nach einem der vorhergehenden Ansprüche, wobei der Luftraum (45) unterhalb der Membraneinheit (6) und der Fluidraum (35) oberhalb der Membraneinheit (6) und der Aufnahmeraum (30) unterhalb des Luftraums (45) und des Fluidraums (35) angeordnet sind, wenn die Gebereinheit (10) bestimmungsgemäß an einem Lenker (101) montiert ist.

12. Bremsanordnung (1) nach einem der vorhergehenden Ansprüche, wobei die Ausgleichsbehältereinrichtung (5) eine Längsachse aufweist, welche zur Horizontalen geneigt ist, sodass die Ausgleichsbehältereinrichtung (5) wenigstens einen Sammelbereich für Luft aufweist, welcher höher als die übrigen Bereiche der Ausgleichsbehältereinrichtung (5) ist, wenn die Gebereinheit (10) bestimmungsgemäß an einem Lenker (101) montiert ist, und wobei die Einfüllöffnung (25) an dem Sammelbereich der Ausgleichsbehältereinrichtung (5) angeordnet ist.

13. Bremsanordnung (1) nach einem der vorhergehenden Ansprüche, wobei die Kanalverbindung (23) und die Einfüllöffnung (25) an in Längsrichtung gegenüberliegenden Endabschnitten der Ausgleichsbehältereinrichtung (5) angeordnet sind.

14. Bremsanordnung (1) nach einem der vorhergehenden Ansprüche, wobei die Belüftungsöffnung (55) und die Einfüllöffnung (25) Längsachsen aufweisen, welche in einer gemeinsamen Ebene verlaufen.

15. Bremsanordnung (1) nach einem der vorhergehenden Ansprüche, wobei die Ausgleichsbehältereinrichtung (5) wenigstens eine Behälterwanne (75) und wenigstens einen Deckel (85) umfasst und wobei die Behälterwanne (75) und der Deckel (85) mittels einer Behälterdichtung (16) abgedichtet aneinander montiert sind und wobei die Behälterdichtung (16) integraler Bestandteil der Membraneinheit (6) ist.

16. Bremsanordnung (1) nach dem vorhergehenden Anspruch, wobei die Belüftungsöffnung (55) in einem Boden (751) in der Behälterwanne (75) ausgebildet ist und wobei die Einfüllöffnung (25) im Deckel (85) ausgebildet ist.

17. Bremsanordnung (1) nach einem der beiden vorhergehenden Ansprüche, wobei die Behälterwanne (75) und/oder der Deckel (85) wenigstens eine Aufnahmenut (750) für die Behälterdichtung (16) bereitstellen und wobei die Behälterwanne (75) und der Deckel (85) im Bereich der Aufnahmenut (750) im bestimmungsgemäß montierten Zustand beabstandet sind, sodass die Behälterdichtung (16) abschersicher aufgenommen ist.

18. Bremsanordnung (1) nach einem der vorhergehenden Ansprüche, wobei die Membraneinheit (6) ein zwischen dem Fluidraum (35) und dem Luftraum (45) aufspannbares Membranelement (26) umfasst und wobei das Membranelement (26) integraler Bestandteil der Membraneinheit (6) ist und wobei die Membraneinheit (6) wenigstens ein bogenförmiges Verbindungselement (36) umfasst und wobei das Verbindungselement (36) das Membranelement (26) wenigstens abschnittsweise gegen einen Boden (751) der Ausgleichsbehältereinrichtung (5) vorspannt.

19. Bremsanordnung (1) nach dem vorhergehenden Anspruch, wobei das Membranelement (26) oberhalb der Belüftungsöffnung (55) gewölbt ausgebildet ist, sodass das Membranelement (26) wenigstens dort beabstandet von einem Boden (751) der Ausgleichsbehältereinrichtung (5) angeordnet ist.

20. Bremsanordnung (1) nach einem der vorhergehenden Ansprüche, wobei die Kanalverbindung (23) vom Fluidraum (35) aus durch einen Deckel (85) der Ausgleichsbehältereinrichtung (5) und durch den Basiskörper (20) zum Zylinderraum (13) verläuft und wobei der Deckel (85) und der Basiskörper (20) umlaufend um die Kanalverbindung (23) mittels einer Kanaldichtung (46) abgedichtet aneinander montiert sind und wobei die Kanaldichtung (46) integraler Bestandteil der Membraneinheit (6) ist.

21. Bremsanordnung (1) nach dem vorhergehenden Anspruch, wobei die Kanaldichtung (46) die Kanalverbindung (23) ringförmig umschließt und sich dabei abschnittsweise zwischen dem Deckel (85) und einer Behälterwanne (75) der Ausgleichsbehältereinrichtung (5) erstreckt.

22. Bremsanordnung (1) nach einem der beiden vorhergehenden Ansprüche, wobei die Behälterdichtung (16) das Membranelement (26) ringförmig umschließt und wobei die Kanaldichtung (46) außerhalb des Membranelements (26) angeordnet ist und nicht ringförmig von der Behälterdichtung (16) umschlossen ist.

23. Bremsanordnung (1) nach einem der drei vorhergehenden Ansprüche, wobei das Hydraulikfluid die Membraneinheit (6) passieren muss, um zum Zylinderraum (13) zu gelangen und wobei das Hydraulikfluid dazu durch eine von der Kanaldichtung (46) umgebene Durchgangsöffnung (56) durch die Membraneinheit (6) hindurchtritt.

24. Bremsanordnung (1) nach einem der vorhergehenden Ansprüche, wobei die Membraneinheit (6) einstückig ausgebildet ist.

25. Bremsanordnung (1) nach einem der vorhergehenden Ansprüche, wobei die Kanalverbindung (23) eine Längsachse aufweist, welche quer zu einer gemeinsamen Längsachse der Ausgleichsbehältereinrichtung (5) und des Zylinderraums (13) und des Aufnahmeraums (30) verläuft.

26. Bremsanordnung (1) nach einem der vorhergehenden Ansprüche, wobei die Kanalverbindung (23) einen Zentralkanal (230) umfasst, welcher sich in wenigstens eine Ausgleichsbohrung (53) und wenigstens eine Schmierbohrung (63) aufteilt und wobei der Zentralkanal (230) und wenigstens eine der wenigstens einen Ausgleichsbohrung (53) und wenigstens eine der wenigstens einen Schmierbohrung (63) Längsachsen aufweisen, welche in einer gemeinsamen Ebene verlaufen.

## Claims

1. Hydraulic brake arrangement (1) for an at least partially muscle-powered bicycle (100), comprising at least one transmitting unit (10) provided for fluid connection with a receiving unit (200), wherein the transmitting unit (10) comprises a brake lever (2) and a cylinder housing (3) with a cylinder space (13), and a piston unit (4) displaceably received in the cylinder space (13), and at least one equalizing reservoir device (5) for a hydraulic fluid, wherein the equalizing reservoir device (5) comprises a tank space (15) and at least one filling mouth (25) for filling in the hydraulic fluid, and wherein at least one membrane unit (6) is disposed in the tank space (15), subdividing the tank space (15) into a fluid space (35) for the hydraulic fluid and an air space (45) sealed against the fluid space (35), wherein at least one duct connection (23) is configured between the fluid space (35) and the cylinder space (13), and wherein the air space (45) is connected with atmosphere through at least one vent opening (55), so as to enable pressure compensation between the air space (45) and atmosphere, and wherein, when the membrane unit (6) is mounted, the filling mouth (25) is in fluid connection with the fluid space (35), wherein the vent opening (55) opens into a receiving space (30) that is at least partially enclosed by an integrally configured base body (20) of the transmitting unit (10), and wherein the cylinder housing 3 is an integral component of the base body 20, and wherein in the receiving space (30), an actuating mechanism (7) is at least partially disposed which serves for force transmission from the brake lever (2) to the piston unit (4),
**characterized in that** the vent opening (55) extends in the base body (20).

2. The brake arrangement (1) according to the preceding claim, wherein an imaginary elongation of the longitudinal axis of the vent opening (55) intersects the actuating mechanism (7) and preferably, a connecting rod device (17) of the actuating mechanism (7).

3. The brake arrangement (1) according to any of the preceding claims, wherein a cam body (27) is at least partially accommodated in the receiving space (30), and wherein a connecting rod device (17) is pivotally linked to the cam body (27), and wherein the vent opening (55) opens into the receiving space (30) between the cam body (27) and a supporting wall (33), wherein in the supporting wall (33), a connecting opening (43) is configured, through which the actuating mechanism (7) extends from the receiving space (30) into the cylinder space (13) to the piston unit (4).

4. The brake arrangement (1) according to the preceding claim, wherein the connecting rod device (17) is linked to the cam body (27) for pivoting around a connecting rod pivot axis (172), and wherein the connecting rod pivot axis (172) and the longitudinal axis of the vent opening (55) extend in one shared plane.

5. The brake arrangement (1) according to any of the preceding claims, wherein the brake lever (2) is linked to a lever accommodation (22) for pivoting around a brake lever pivot axis (12), and wherein the vent opening (55) has a longitudinal axis which lies in one plane with the brake lever pivot axis (12).

6. The brake arrangement (1) according to the preceding claim, wherein the brake lever pivot axis (12) extends through the receiving space (30).

7. The brake arrangement (1) according to any of the preceding claims, wherein the vent opening (55) and the duct connection (23) have longitudinal axes extending in a shared plane.

8. The brake arrangement (1) according to any of the preceding claims, wherein an imaginary axial elongation of the cylinder space (13) extends through the receiving space (30).

9. The brake arrangement (1) according to any of the preceding claims, wherein the equalizing reservoir device (5) is disposed above the cylinder space (13) and the receiving space (30), and wherein the equalizing reservoir device (5) and the cylinder space (13) and/or the receiving space (30) have longitudinal axes which extend in a shared plane.

10. The brake arrangement (1) according to any of the preceding claims, wherein the filling mouth (25) is also configured as a deaeration opening (65) for deaerating a hydraulic circuit (11), and wherein deaeration is possible when the membrane unit (6) is mounted as intended.

11. The brake arrangement (1) according to any of the preceding claims, wherein the air space (45) is disposed beneath the membrane unit (6), and the fluid space (35), above the membrane unit (6), and the receiving space (30), beneath the air space (45) and the fluid space (35), when the transmitting unit (10) is mounted to the handlebar (101) as intended.

12. The brake arrangement (1) according to any of the preceding claims, wherein the equalizing reservoir device (5) has a longitudinal axis which is inclined to the horizontal, such that the equalizing reservoir device (5) has at least one collecting area for air, which is higher than the other areas of the equalizing reservoir device (5), when the transmitting unit (10) is mounted to the handlebar (101) as intended, and wherein the filling mouth (25) is disposed in the collecting area of the equalizing reservoir device (5).

13. The brake arrangement (1) according to any of the preceding claims, wherein the duct connection (23) and the filling mouth (25) are disposed on end portions of the equalizing reservoir device (5) opposite each other in the longitudinal direction.

14. The brake arrangement (1) according to any of the preceding claims, wherein the vent opening (55) and the filling mouth (25) have longitudinal axes extending in a shared plane.

15. The brake arrangement (1) according to any of the preceding claims, wherein the equalizing reservoir device (5) comprises at least one tank trough (75) and at least one cover (85), and wherein the tank trough (75) and the cover (85) are mounted to one another, sealed by means of a tank sealing (16), and wherein the tank sealing (16) is an integral component of the membrane unit (6).

16. The brake arrangement (1) according to the preceding claim, wherein the vent opening (55) is configured in the bottom (751) in the tank trough (75), and wherein the filling mouth (25) is configured in the cover (85).

17. The brake arrangement (1) according to any of the two preceding claims, wherein the tank trough (75) and/or the cover (85) provide at least one receiving groove (750) for the tank sealing (16), and wherein the tank trough (75) and the cover (85) are spaced apart in the region of the receiving groove (750) in the mounted state as intended, such that the tank sealing (16) is accommodated shear-proof.

18. The brake arrangement (1) according to any of the preceding claims, wherein the membrane unit (6) comprises a membrane component (26) provided for spreading between the fluid space (35) and the air space (45), and wherein the membrane component (26) is an integral component of the membrane unit (6), and wherein the membrane unit (6) comprises at least one arcuate connection member (36), and wherein the connection member (36) biases the membrane component (26) at least in sections against the bottom (751) of the equalizing reservoir device (5).

19. The brake arrangement (1) according to the preceding claim, wherein the membrane component (26) is configured bulged above the vent opening (55), such that the membrane component (26) at least in this place is disposed spaced apart from the bottom (751) of the equalizing reservoir device (5).

20. The brake arrangement (1) according to any of the preceding claims, wherein the duct connection (23) extends from the fluid space (35) through a cover (85) of the equalizing reservoir device (5) and through the base body (20) to the cylinder space (13), and wherein the cover (85) and the base body (20) are circumferentially mounted to one another around the duct connection (23), sealed by means of a duct sealing (46), and wherein the duct sealing (46) is an integral component of the membrane unit (6).

21. The brake arrangement (1) according to the preceding claim, wherein the duct sealing (46) encircles the duct connection (23) in a ring shape, extending in sections between the cover (85) and a tank trough (75) of the equalizing reservoir device (5).

22. The brake arrangement (1) according to any of the two preceding claims, wherein the tank sealing (16) encircles the membrane component (26) in a ring shape, and wherein the duct sealing (46) is disposed outside of the membrane component (26) and is not encircled by the tank sealing (16) in a ring shape.

23. The brake arrangement (1) according to any of the three preceding claims, wherein the hydraulic fluid must pass the membrane unit (6) to get to the cylinder space (13), and wherein to this end, the hydraulic fluid passes the membrane unit (6) through a through hole (56) enclosed by the duct sealing (46).

24. The brake arrangement (1) according to any of the preceding claims, wherein the membrane unit (6) is configured integrally.

25. The brake arrangement (1) according to any of the preceding claims, wherein the duct connection (23) has a longitudinal axis extending transverse to a shared longitudinal axis of the equalizing reservoir device (5) and the cylinder space (13) and the receiving space (30).

26. The brake arrangement (1) according to any of the preceding claims, wherein the duct connection (23) comprises a central duct (230), which is subdivided into at least one equalizing hole (53) and at least one lubrication hole (63), and wherein the central duct (230) and at least one of the at least one equalizing holes (53) and at least one of the at least one lubrication holes (63) comprise longitudinal axes extending in a shared plane.

## Revendications

1. Système de freinage hydraulique (1) pour une bicyclette (100) entraînée au moins partiellement par force musculaire, comprenant au moins une unité d'émetteur (10) qui peut être reliée par fluide à une unité capteur (200), ladite unité d'émetteur (10) présentant un levier de frein (2) et un boîtier de cylindre (3) doté d'une chambre de cylindre (13), et une unité de piston (4) logée de manière coulissante dans la chambre de cylindre (13) et au moins un dispositif de réservoir de compensation (5) pour un fluide hydraulique, ledit dispositif de réservoir de compensation (5) comprenant une chambre de réservoir (15) et au moins une ouverture de remplissage (25) pour verser le fluide hydraulique, et au moins une unité de membrane (6) étant agencée dans la chambre de réservoir (15), laquelle unité de membrane divise la chambre de réservoir (15) en une chambre à fluide (35) pour le fluide hydraulique et une chambre à air (45) étanche par rapport à la chambre à fluide (35), au moins une liaison par conduite (23) étant conçue entre la chambre à fluide (35) et la chambre du cylindre (13), et la chambre à air (45) étant reliée à l'atmosphère par au moins un trou d'aération (55), de sorte qu'il est possible de réaliser une compensation de pression entre la chambre à air (45) et l'atmosphère, et ladite ouverture de remplissage (25) étant, lorsque l'unité de membrane (6) est montée, reliée par fluide à la chambre à fluide (35),
le trou d'aération (55) débouchant dans une chambre de logement (30) entourée au moins partiellement d'un corps de base (20) de l'unité d'émetteur (10), lequel corps de base est formé d'un seul tenant, le boîtier du cylindre (3) faisant partie intégrale dudit corps de base (20), et un mécanisme actionneur (7) étant au moins partiellement agencé dans ladite chambre de logement (30), lequel mécanisme sert à transférer une force du levier de frein (2) sur l'unité de piston (4), **caractérisé en ce que** le trou d'aération (55) s'étend dans le corps de base (20).

2. Système de freinage (1) selon l'une quelconque des revendications précédentes, un prolongement imaginaire d'un axe longitudinal du trou d'aération (55) coupant le mécanisme actionneur (7) et de préférence une bielle (17) du mécanisme actionneur (7).

3. Système de freinage (1) selon l'une quelconque des revendications précédentes, un corps de came (27) étant logé au moins partiellement dans la chambre de logement (30), et une bielle (17) étant rattachée de manière pivotante sur le corps de came (27), et le trou d'aération (55) entre le corps de came (27) et une paroi d'appui (33) débouchant dans la chambre de logement (30), un trou de liaison (43) étant formé dans la paroi d'appui (33) au travers duquel le mécanisme actionneur (7) s'étend à partir de la chambre de logement (30) jusqu'à l'unité de piston (4) en passant par la chambre du cylindre (13).

4. Système de freinage (1) selon la revendication précédente, la bielle (17) étant articulée au corps de came (27) de manière à pouvoir pivoter autour d'un axe de pivotement de bielle (172), et ledit axe de pivotement de bielle (172) et un axe longitudinal du trou d'aération (55) s'étendant dans un plan commun.

5. Système de freinage (1) selon l'une quelconque des revendications précédentes, le levier de frein (2) étant articulé sur un logement de levier (22) de manière à pouvoir pivoter autour d'un axe de pivotement (12) du levier de frein, et le trou d'aération (55) présentant un axe longitudinal qui se trouve dans le même plan que l'axe de pivotement (12) du levier de frein.

6. Système de freinage (1) selon la revendication précédente, l'axe de pivotement du levier de frein (12) traversant la chambre de logement (30).

7. Système de freinage (1) selon l'une quelconque des revendications précédentes, le trou d'aération (55) et la liaison par conduite (23) présentant des axes longitudinaux qui s'étendent dans un plan commun.

8. Système de freinage (1) selon l'une quelconque des revendications précédentes, un prolongement axial imaginaire de la chambre de cylindre (13) s'étendant à travers la chambre de logement (30).

9. Système de freinage (1) selon l'une quelconque des revendications précédentes, le dispositif de réservoir de compensation (5) étant agencé au-dessus de la chambre de cylindre (13) et de la chambre de logement (30), et le dispositif de réservoir de compensation (5) et la chambre de cylindre (13) et/ou la chambre de logement (30) présentant des axes longitudinaux qui s'étendent dans un plan commun.

10. Système de freinage (1) selon l'une quelconque des revendications précédentes, l'ouverture de remplissage (25) étant également conçue comme un trou d'aération (65) pour aérer un circuit hydraulique (11), et une aération étant possible lorsque l'unité de membrane (6) est montée correctement.

11. Système de freinage (1) selon l'une quelconque des revendications précédentes, la chambre à air (45) étant agencée en-dessous de l'unité de membrane (6), et la chambre à fluide (35) étant agencée au-dessus de l'unité de membrane (6) et la chambre à logement (30) étant agencée en-dessous de la chambre à air (45) et de la chambre à fluide (35) lorsque l'unité d'émetteur (10) est montée correctement sur un guidon (101).

12. Système de freinage (1) selon l'une quelconque des revendications précédentes, le dispositif de réservoir de compensation (5) présentant un axe longitudinal incliné par rapport à l'horizontal, de sorte que ledit dispositif de réservoir de compensation (5) présente au moins une zone de collecte d'air qui est plus haute que les autres zones du dispositif de réservoir de compensation (5) lorsque l'unité d'émetteur (10) est montée correctement sur un guidon (101), et l'ouverture de remplissage (25) étant agencée au niveau de la zone de collecte du dispositif de réservoir de compensation (5).

13. Système de freinage (1) selon l'une quelconque des revendications précédentes, la liaison par conduite (23) et l'ouverture de remplissage (25) étant agencées sur des sections d'extrémité opposées dans le sens longitudinal du dispositif de réservoir de compensation (5).

14. Système de freinage (1) selon l'une quelconque des revendications précédentes, le trou d'aération (55) et l'ouverture de remplissage (25) présentant des axes longitudinaux qui s'étendent dans un plan commun.

15. Système de freinage (1) selon l'une quelconque des revendications précédentes, le dispositif de réservoir de compensation (5) comprenant au moins une cuve (75) et au moins un couvercle (85), ladite cuve (75) et ledit couvercle (85) étant assemblés de manière étanche l'un par rapport à l'autre au moyen d'un joint de cuve (16), et ledit joint de cuve (16) faisant partie intégrante de l'unité de membrane (6).

16. Système de freinage (1) selon la revendication précédente, le trou d'aération (55) étant conçu dans un fond (751) de la cuve (75), et l'ouverture de remplissage (25) étant conçue dans le couvercle (85).

17. Système de freinage (1) selon l'une quelconque des deux revendications précédentes, la cuve (75) et/ou le couvercle (85) comportant au moins une rainure de logement (750) pour le joint d'étanchéité du réservoir (16), et la cuve (75) et le couvercle (85) étant espacés l'un de l'autre au niveau de la rainure de logement (750) lorsqu'ils sont montés correctement, de sorte que le joint d'étanchéité du réservoir (16) soit logé de manière à résister au cisaillement.

18. Système de freinage (1) selon l'une quelconque des revendications précédentes, l'unité de membrane (6) comprenant un élément de membrane (26) qui peut être tendu entre la chambre à fluide (35) et la chambre à air (45), et ledit élément de membrane (26) faisant partie intégrante de l'unité de membrane (6), et ladite unité de membrane (6) comprenant au moins un élément de liaison (36) en forme d'arc, et ledit élément de liaison (36) mettant en précontrainte l'élément de membrane (26), au moins partiellement, contre un fond (751) du dispositif de réservoir de compensation (5).

19. Système de freinage (1) selon la revendication précédente, l'élément de membrane (26) étant conçu de forme bombée **au-**dessus du trou d'aération (55), de sorte que l'élément de membrane (26) est agencé au moins à cet emplacement à distance d'un fond (751) du dispositif de réservoir de compensation (5).

20. Système de freinage (1) selon l'une quelconque des revendications précédentes, la liaison par conduite (23) partant de la chambre à fluide (35) et traversant un couvercle (85) du dispositif de réservoir de compensation (5) et le corps de base (20) jusqu'à la chambre de cylindre (13), et le couvercle (85) et le corps de base (20) étant assemblés l'un à l'autre de manière étanche sur tout le pourtour de la liaison par conduite (23) au moyen d'un joint de conduite (46), et ledit joint de conduite (46) faisant partie intégrante de l'unité de membrane (6).

21. Système de freinage (1) selon la revendication précédente, le joint de conduite (46) entourant la liaison par conduite (23) de manière annulaire et s'étendant à cet égard partiellement entre le couvercle (85) et une cuve (75) du dispositif de réservoir de compensation (5).

22. Système de freinage (1) selon l'une quelconque des deux revendications précédentes, le joint de réservoir (16) entourant l'élément de membrane (26) de manière annulaire, et le joint de conduite (46) étant agencé à l'extérieur de l'élément de membrane (26) et n'étant pas entouré de manière annulaire par le joint de réservoir (16).

23. Système de freinage (1) selon l'une quelconque des trois revendications précédentes, le fluide hydraulique devant traverser l'unité de membrane (6) pour atteindre la chambre de cylindre (13), et le fluide hydraulique traversant à cette fin l'unité de membrane (6) en passant par une ouverture de passage (56) entourée par le joint de la conduite (46).

24. Système de freinage (1) selon l'une quelconque des revendications précédentes, ladite unité de membrane (6) étant conçue d'un seul tenant.

25. Système de freinage (1) selon l'une quelconque des revendications précédentes, la liaison par conduite (23) présentant un axe longitudinal qui s'étant perpendiculairement à un axe longitudinal commun du dispositif de réservoir de compensation (5), de la chambre du cylindre (13) et de la chambre de logement (30).

26. Système de freinage (1) selon l'une quelconque des revendications précédentes, la liaison par conduite (23) comprenant une conduite centrale (230) qui se divise en au moins un alésage de compensation (53) et au moins un alésage de lubrification (63), et la conduite centrale (230) et au moins un desdits au moins un alésage (53) et au moins un des au moins un alésage de lubrification (63) présentant des axes longitudinaux qui s'étendent dans un plan commun.
